(19) Europäisches Patentamt
European Patent Office
Office européen des brevets

(11) EP 0 641 257 B1

(12) EUROPEAN PATENT SPECIFICATION

(45) Date of publication and mention of the grant of the patent:
**28.04.1999 Bulletin 1999/17**

(21) Application number: **92916832.6**

(22) Date of filing: **23.07.1992**

(51) Int. Cl.$^6$: **B01J 29/06**, C10G 11/05, C10G 47/20

(86) International application number:
**PCT/US92/06128**

(87) International publication number:
**WO 93/01884 (04.02.1993 Gazette 1993/04)**

# (54) HYDROPROCESSING CATALYST

WASSERSTOFFBEHANDLUNGSKATALYSATOR

CATALYSEUR D'HYDROTRAITEMENT

(84) Designated Contracting States:
**BE DE FR GB IT NL**

(30) Priority: **24.07.1991 US 734987**
**24.07.1991 US 734998**

(43) Date of publication of application:
**08.03.1995 Bulletin 1995/10**

(73) Proprietor:
**MOBIL OIL CORPORATION**
**Fairfax, Virginia 22037-0001 (US)**

(72) Inventors:
- **APELIAN, Minas, Robert**
  **Vincentown, NJ 08088-8976 (US)**
- **DEGNAN, Thomas, Francis, Jr.**
  **Moorestown, NJ 08057-2109 (US)**
- **LEONOWICZ, Michael, Edward**
  **Medford Lakes, NJ 08055-1307 (US)**
- **KRESGE, Charles, Theodore**
  **West Chester, PA 19380-6442 (US)**
- **MARLER, David, Owen**
  **Deptford, NJ 08096-2557 (US)**
- **MAZZONE, Dominick, Nicholas**
  **Wenonah, NJ 08090-1734 (US)**
- **ROTH, Wieslaw, Jerzy**
  **Sewell, NJ 08080-1807 (US)**
- **VARTULI, James, Clarke**
  **West Chester, PA 19380-5848 (US)**

(74) Representative: **Kador & Partner**
**Corneliusstrasse 15**
**80469 München (DE)**

(56) References cited:
**US-A- 3 755 145**
**US-A- 4 791 088**
**US-A- 4 981 663**
**US-A- 4 983 273**
**US-A- 5 098 684**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 641 257 B1

## Description

This invention relates to a hydroprocessing catalyst based on synthetic ultra-large pore size crystalline materials.

This invention relates to catalysts which are especially useful for hydrocracking and for other hydroprocessing applications including hydrotreating and hydrofinishing. They are particularly useful for the production of high viscosity index lubricants by hydrocracking mineral oil feedstocks, especially distillate stocks.

Many chemical processes, especially in the petroleum refining and petrochemical industries utilize bifunctional catalysts which exhibit both acidic and hydrogenation-dehydrogenation activity. Catalysts of this type are frequently used in the processing of various hydrocarbon fractions in processes where hydrogen is present either as a feed component or as a product of the reaction such as hydrogenation, hydrocracking, hydrotreating, hydrofinishing, hydrodewaxing (see U.S. Patent No. 3,968,024), hydrodemetallation, hydroisomerization, reforming and the like. For the purposes of this application, processes of this type are referred to as hydroprocessing applications regardless of whether the hydrogen is used as a feed component, i.e. a reactant as in hydrocracking, or is produced in the process as one of the reaction products as in reforming. Bifunctional catalysts are utilized in various petrochemical hydroprocessing applications such as, for example, xylene isomerization, as described in U.S. Patent Nos. 3,856,572; 4,101,597 and 4,312,790; toluene disproportionation as described in U.S. Patent No. 4,052,476 and other reactions where hydrogen is present either as a feed component or as a product of the desired reaction. In many petroleum refining applications, the metal component is supported on an amorphous support material such as alumina or silica-alumina since these materials often have the requisite pore volumes and the appropriate pore sizes for the high molecular weight hydrocarbons which may be encountered in the processing.

Hydrocracking is a process which has achieved widespread use in petroleum refining for converting various petroleum fractions to lighter and more valuable products, especially distillates such as jet fuels, diesel oils and heating oils. Hydrocracking is generally carried out in conjunction with an initial hydrotreating step in which the heteroatom-containing impurities in the feed are hydrogenated without a significant degree of bulk conversion. During this initial step, the heteroatoms, principally nitrogen and sulfur, are converted to inorganic form (ammonia, hydrogen-sulfide) and these gases may be removed prior to the subsequent hydrocracking step although the two stages may be combined in cascade without interstage separation as, for example, in the Unicracking-JHC process and in the moderate pressure hydrocracking process described in U.S. Patent No. 4,435,275.

In the second stage of the operation, the hydrotreated feedstock is contacted with a bifunctional catalyst which possesses both acidic and hydrogenation/dehydrogenation functionality. In this step, the characteristic hydrocracking reactions occur in the presence of the catalyst. Polycyclic aromatics in the feed are hydrogenated, and ring opening of aromatic and naphthenic rings takes place together with dealkylation. Further hydrogenation may take place upon opening of the aromatic rings. Depending upon the severity of the reaction conditions, the polycyclic aromatics in the feed will be hydrocracked to paraffinic materials or, under less severe conditions, to monocylic aromatics as well as paraffins. Naphthenic and aromatic rings may be present in the product, for example, as substituted naphthenes and substituted polycyclic aromatics in the higher boiling products, depending upon the degree of operational severity.

In the lube hydrocracking process, which is well established in the petroleum refining industry, an initial hydrocracking step is carried out under high pressure in the presence of a bifunctional catalyst which effects partial saturation and ring opening of the aromatic components which are present in the feed. The hydrocracked product is then subjected to dewaxing in order to reach the target pour point since the products from the initial hydrocracking step which are paraffinic in character include components with a relatively high pour point which need to be removed in the dewaxing step.

In theory, as well as in practice, lubricants should be highly paraffinic in nature since paraffins possess the desirable combination of low viscosity and high viscosity index. Normal paraffins and slightly branched paraffins e.g. n-methyl paraffins, are waxy materials which confer an unacceptably high pour point on the lube stock and are therefore removed during the dewaxing operations in the conventional refining process described above. It is, however, possible to process waxy feeds in order to retain many of the benefits of their paraffinic character while overcoming the undesirable pour point characteristic. A severe hydrotreating process for manufacturing lube oils of high viscosity index is disclosed in Developments in Lubrication PD 19(2), 221-228, S. Bull et al, and in this process, waxy feeds such as waxy distillates, deasphalted oils and slack waxes are subjected to a two-stage hydroprocessing operation in which an initial hydrotreating unit processes the feeds in blocked operation with the first stage operating under higher temperature conditions to effect selective removal of the undesirable aromatic compounds by hydrocracking and hydrogenation. The second stage operates under relatively milder conditions of reduced temperature at which hydrogenation predominates, to adjust the total aromatic content and influence the distribution of aromatic types in the final product. The viscosity and flash point of the base oil are then controlled by topping in a subsequent redistillation step after which the pour point of the final base oil is controlled by dewaxing in a solvent dewaxing (MEK-toluene) unit. The slack waxes removed from the dewaxer may be reprocessed to produce a base oil of high viscosity index. Processes of this type,

employing a waxy feed which is subjected to hydrocracking over an amorphous bifunctional catalyst such as nickel-tungsten on alumina or silica-alumina are disclosed, for example, in British Patents Nos. 1,429,494, 1,429,291 and 1,493,620 and U.S. Patents Nos. 3,830,273, 3,776,839, 3,794,580, and 3,682,813.

In lube processes of this kind, the catalyst is, like the fuels hydrocracking catalyst, typically a bifunctional catalyst containing a metal hydrogenation component on an amorphous acidic support. The metal component is usually a combination of base metals, with one metal selected from the iron group (Group VIIIA) and one metal from Group VIA of the Periodic Table, for example, nickel in combination with molybdenum or tungsten. The activity of the catalyst may be increased by the use of fluorine, either by incorporation into the catalyst during its preparation in the form of a suitable fluorine compound or by in situ fluoridating during the operation of the process, as disclosed in GB 1,390,359.

Although the lube hydrocracking processes using an amorphous catalyst for the treatment of the waxy feeds has shown itself to be capable of producing high V.I. lubricants, it is not without its limitations. The major process objective in lube hydrocracking (LHDC) is to saturate the aromatic components in the feed to produce saturated cyclic compounds (naphthenes) or, by ring opening of the naphthenes, paraffinic materials of improved lubricating properties. This requires the hydrogenation activity of the catalyst to be high. There is no corresponding requirement for a high level of cracking activity since no major change in boiling range is required or even desirable: the amount of material in the lube boiling range, typically 650°F+, should be maintained at the maximum level consistent with the degree of ring opening required to furnish a lube product of the desired quality. This combination of requirements has typically led to the use of LHDC catalysts with high metals loadings, particularly for base metal combinations with Group VIA metals such as tungsten: commercial LHDC catalysts currently available have typical nickel loadings of 5% but the tungsten loading may be in the range of 10 to 25%.

The use of high metal loadings, although necessary for the hydrogenation function, brings a concomitant disadvantage, that the surface area decreases with increasing metal content, so that the area available for the acid-catalyzed reactions decreases and it is usually necessary to resort to the use of acidity promoters such as fluorine to restore the acidity to the requisite level. There are environmental and metallurgical (corrosion) concerns associated with the use of fluorine and other promoters used with these catalysts, regardless of whether the promoter is added to the catalyst initially or, as is more common, by the use of a promoter which is sorbed onto the catalyst immediately prior to use or continuously during operation.

Another problem connected with the use of high metal loadings is that it becomes progressively more difficult to introduce the metal into the porous structure of the catalyst as the metal content increases: the metal already on the catalyst tends to block the pores of the catalyst so that no more metal can enter. To overcome this problem, the metal may be incorporated into the catalyst during its manufacture by adding the metal in the form of a solution at the hydrogel stage. The metal-containing hydrogel is then calcined so that the metal is uniformly distributed throughout the pore structure of the catalyst. Processes of this type are described in British Patents Nos. 1,398,384; 1,493,620; 1,546,398 and 1,565,425. This process, however, is not preferred to impregnation or exchange because it typically produces catalysts having poorer metals dispersion. The metals have a greater opportunity to agglomerate during all the process steps which follow the introduction of the metals.

With these factors in mind, it becomes clear that it would be desirable to have the capability to formulate a catalyst with high metals loading which could be manufactured by simple exchange or impregnation techniques and which retained a high surface area even at high metals loadings. Such catalysts would be of especial use for LHDC processes but would also find application for other hydrotreating processes such as hydrogenation, hydrofinishing, and for hydrodemetallation, especially of high metal content petroleum fractions such as residual fractions, shale oil and the like.

The present invention is directed to bifunctional catalysts which are based on a novel class of materials with useful catalytic properties. According to the present invention, the bifunctional catalysts which may be used to catalyze a wide variety of reactions, especially hydroprocessing reactions such as those referred to above, comprise a metal hydrogenation-dehydrogenation component which is supported on a synthetic composition of matter comprising an ultra-large pore crystalline phase. The crystalline material of this invention is an inorganic, porous, non-layered phase having uniformly-sized pores with a maximum perpendicular cross-section pore dimension of at least 1.3 nm (13 Angstroms (Å)), usually within the range of from 1.3 to 20.0 nm (13 to 200 Angstroms). These crystalline materials exhibit an X-ray diffraction pattern with at least one peak having a relative intensity of 100 at a d-spacing greater than 1.8 nm (18 Å). They possess high porosities and surface areas which results in correspondingly high sorptive capacities indicated by a benzene adsorption capacity of greater than 15 grams benzene/100 grams crystal at 6.7 kPa (50 torr) and 25°C. They may also be characterized by the electron diffraction pattern which can be indexed with a $d_{100}$ value greater than about 1.8 nm (18 Angstroms). In a preferred embodiment, the pores are arranged in a uniform hexagonal arrangement which is manifested in the X-ray and electron diffraction patterns.

As demonstrated hereinafter, the inorganic, non-layered mesoporous crystalline materials used to support the metal component of the catalysts have the following composition:

$$M_{n/q}(W_a\ X_b\ Y_c\ Z_d\ 0_h)$$

wherein W is a divalent element, such as a divalent first row transition metal, e.g. manganese, cobalt and iron, and/or

magnesium, preferably cobalt; X is a trivalent element, such as aluminum, boron, iron and/or gallium, preferably aluminum; Y is a tetravalent element such as silicon and/or germanium, preferably silicon; Z is a pentavalent element, such as phosphorus; M is one or more ions, such as, for example, ammonium, Group IA, IIA and VIIB ions, usually hydrogen, sodium and/or fluoride ions; n is the charge of the composition excluding M expressed as oxides; q is the weighted molar average valence of M; n/q is the number of moles or mole fraction of M; a, b, c, and d are mole fractions of W, X, Y and Z, respectively; h is a number of from 1 to 2.5; and (a+b+c+d) = 1 .

A preferred embodiment of the above crystalline material is when (a+b+c) is greater than d, and h = 2. A further embodiment is when a and d = 0, and h = 2.

In the as-synthesized form, the crystalline support has a composition, on an anhydrous basis, expressed empirically as follows:

$$rRM_{n/q}(W_a X_b Y_c Z_d 0_h)$$

wherein R is the total organic material not included in M as an ion, and r is the coefficient for R, i.e. the number of moles or mole fraction of R.

For the purposes of making the present bifunctional catalysts, the preferred forms are the metallosilicates, of which the aluminosilicate is usually the most preferred.

The M and R components are associated with the material as a result of their presence during crystallization, and are easily removed or, in the case of M, replaced by post-crystallization methods hereinafter more particularly described. To the extent desired, the original M, e.g. sodium or chloride, ions of the as-synthesized material of this invention can be replaced in accordance with techniques well known in the art, at least in part, by ion exchange with other ions. Preferred replacing ions include metal ions, hydrogen ions, hydrogen precursor, e.g. ammonium, ions and mixtures thereof. For use in the present catalysts, cations of metals which exhibit hydrogenation- dehydrogenation functionality may be exchanged into the crystalline material to provide some or all of the metal component. One advantage accruing from the large pores size of the mesoporous materials is that it is possible to carry out a cation exchange without the necessity of calcining the as-synthesized material to remove the organic materials used in the synthesis. As an alternative (or in addition to) the incorporation of the metal component of the catalyst by exchange, the metal may also be provided by impregnation using cations or anions of the metal or metals, as described further below. Cations which may be exchanged into the crystalline material include hydrogen, rare earth metals and metals of Groups IA (e.g. K), IIA (e.g. Ca), VIA (e.g. Cr, Mo, W), VIIA (e.g. Mn), VIIIA (e.g. Ni), IB (e.g. Cu), IIB (e.g. Zn), IIIB (e.g. In), IVB (e.g. Sn), and VIIB (e.g. F) of the Periodic Table of the Elements (Sargent-Welch Scientific Co. Cat. No. S-18806, 1979) and mixtures of these cations.

The crystalline (i.e. meant here as having sufficient order to provide a diffraction pattern such as, for example, by X-ray, electron or neutron diffraction, following calcination with at least one peak) mesoporous material of this invention may be characterized by its heretofore unknown structure, including extremely large pore windows, and high sorption capacity. The term "mesoporous" is used here to indicate crystals having uniform pores within the range of from 1.3 nm to 20.0 nm (13 Angstroms to 200 Angstroms). The materials of this invention will have uniform pores within the range of from about 1.3 nm to 20.0 nm (13 Angstroms to 200 Angstroms), more usually from about 1.5 nm to 10.0 nm (15 Angstroms to 100 Angstroms). For the purposes of this application, a working definition of "porous" is a material that adsorbs at least 1 gram of a small molecule, such as Ar, $N_2$, n-hexane or cyclohexane, per 100 grams of the solid.

The mesoporous material used as the support component of the present catalysts can be distinguished from other porous inorganic solids by the regularity of its large open pores, whose pore size more nearly resembles that of amorphous or paracrystalline materials, but whose regular arrangement and uniformity of size (pore size distribution within a single phase of, for example, ± 25%, usually ± 15% or less of the average pore size of that phase) resemble more those of crystalline framework materials such as zeolites. In its preferred form, the crystalline support material appears to have a hexagonal arrangement of large open channels that can be synthesized with open internal diameters from about 13 Angstroms to about 200 Angstroms. The term "hexagonal" is intended to encompass not only materials that exhibit mathematically perfect hexagonal symmetry within the limits of experimental measurement, but also those with significant observable deviations from that ideal state. A working definition as applied to the microstructure of the present invention would be that most channels in the material would be surrounded by six nearest neighbor channels at roughly the same distance. Defects and imperfections will cause significant numbers of channels to violate this criterion to varying degrees, depending on the quality of the material's preparation. Samples which exhibit as much as ± 25% random deviation from the average repeat distance between adjacent channels still clearly give recognizable images of the present ultra-large pore materials. Comparable variations are also observed in the $d_{100}$ values from the electron diffraction patterns. The preferred hexagonal crystalline support materials, referred to below as having the structure of MCM-41, are described in detail in Application Serial No. 07/625,245, to which reference is made for a more extended description of these materials, their preparation and properties, including examples of their X-ray and electron diffration patterns.

The most regular preparations of the crystalline support materials give an X-ray diffraction pattern with a few distinct maxima in the extreme low angle region. In the preferred hexagonal materials, the positions of these peaks

approximately fit the positions of the hkO reflections from a hexagonal lattice. The X-ray diffraction pattern, however, is not always a sufficient indicator of the presence of these materials, as the degree of regularity in the microstructure and the extent of repetition of the structure within individual particles affect the number of peaks that will be observed. Indeed, preparations with only one distinct peak in the low angle region of the X-ray diffraction pattern have been found to contain substantial amounts of the material in them. Other techniques to illustrate the microstructure of this material are transmission electron microscopy and electron diffraction. Properly oriented specimens of the material show, in the preferred materials, a hexagonal arrangement of large channels and the corresponding electron diffraction pattern gives an approximately hexagonal arrangement of diffraction maxima. The $d_{100}$ spacing of the electron diffraction patterns is the distance between adjacent spots on the hkO projection of the hexagonal lattice and is related to the repeat distance $a_0$ between channels observed in the electron micrographs through the formula $d_{100} = a_0\sqrt{3}/2$. This $d_{100}$ spacing observed in the electron diffraction patterns corresponds to the d-spacing of a low angle peak in the X-ray diffraction pattern of the material. The most highly ordered preparations of the material obtained so far have 20-40 distinct spots observable in the electron diffraction patterns. These patterns can be indexed with the hexagonal hkO subset of unique reflections of 100, 110, 200, 210, etc., and their symmetry-related reflections.

In its calcined form, the crystalline support materials may be further characterized by an X-ray diffraction pattern with at least one peak at a position greater than about 1.8 nm (18 Angstrom Units) d-spacing (4.909 degrees two-theta for Cu K-alpha radiation) which corresponds to the $d_{100}$ value of the electron diffraction pattern of the material, and an equilibrium benzene adsorption capacity of greater than about 15 grams benzene/100 grams crystal at 50 mm Hg (50 torr) and 25°C (basis: crystal material having been treated in an attempt to insure no pore blockage by incidental contaminants, if necessary).

The equilibrium benzene adsorption capacity characteristic of the crystalline support material is measured on the basis of no pore blockage by incidental contaminants. For instance, the sorption test will be conducted on the crystalline material phase having any pore blockage contaminants and water removed by ordinary methods. Water may be removed by dehydration techniques, e.g. thermal treatment. Pore blocking inorganic amorphous materials, e.g. silica, and organics may be removed by contact with acid or base or other chemical agents such that the detrital material will be removed without detrimental effect on the crystal.

More particularly, the calcined crystalline material may be characterized by its X-ray diffraction pattern which exhibits at least two peaks at positions greater than 1.0 nm (10 Angstrom Units) d-spacing (8.842 degrees two-theta for Cu K-alpha radiation), at least one of which is at a position greater than about 1.8 nm (18 Angstrom Units) d-spacing, and no peaks at positions less than about 1.0 nm (10 Angstrom Units) d-spacing with relative intensity greater than about 20% of the strongest peak. Still more particularly, the X-ray diffraction pattern of the calcined support material will have no peaks at positions less than about 1.0 nm (10 Angstrom Units) d-spacing with relative intensity greater than about 10% of the strongest peak. In any event, at least one peak in the X-ray diffraction pattern will have a d-spacing that corresponds to the $d_{100}$ value of the electron diffraction pattern of the material.

Still more particularly, the calcined inorganic, non-layered crystalline material of the invention is characterized as having a pore size of about 1.3 nm (13 Angstroms) or greater as measured by physisorption measurements, hereinafter more particularly set forth. Pore size is considered a maximum perpendicular cross-section pore dimension of the crystal.

X-ray diffraction data referred to here were collected on a Scintag PAD X automated diffraction system employing theta-theta geometry, Cu K-alpha radiation, and an energy dispersive X-ray detector. Use of the energy dispersive X-ray detector eliminated the need for incident or diffracted beam monochromators. Both the incident and diffracted X-ray beams were collimated by double slit incident and diffracted collimation systems. The slit sizes used, starting from the X-ray tube source, were 0.5, 1.0, 0.3 and 0.2 mm, respectively. Different slit systems may produce differing intensities for the peaks. The materials of the present invention that have the largest pore sizes may require more highly collimated incident X-ray beams in order to resolve the low angle peak from the transmitted incident X-ray beam.

The diffraction data were recorded by step-scanning at 0.04 degrees of two-theta, where theta is the Bragg angle, and a counting time of 10 seconds for each step. The interplanar spacings, d's, were calculated in Angstrom units (A), and the relative intensities of the lines, $I/I_o$, where $I_o$ is one-hundredth of the intensity of the strongest line, above background, were derived with the use of a profile fitting routine. The intensities were uncorrected for Lorentz and polarization effects. The relative intensities are given in terms of the symbols vs = very strong (75-100), s = strong (50-74), m = medium (25-49) and w = weak (0-24). It should be understood that diffraction data listed as single lines may consist of multiple overlapping lines which under certain conditions, such as very high experimental resolution or crystallographic changes, may appear as resolved or partially resolved lines. Typically, crystallographic changes can include minor changes in unit cell parameters and/or a change in crystal symmetry, without a substantial change in structure. These minor effects, including changes in relative intensities, can also occur as a result of differences in cation content, framework composition, nature and degree of pore filling, thermal and/or hydrothermal history, and peak width/shape variations due to particle size/shape effects, structural disorder or other factors known to those skilled in the art of X-ray diffraction.

The equilibrium benzene adsorption capacity is determined by contacting the crystalline material, after dehydration or calcination at, for example, about 540°C for at least one hour and other treatment, if necessary, in an attempt to remove any pore blocking contaminants, at 25°C and 50 torr benzene until equilibrium is reached. The weight of benzene sorbed is then determined as more particularly described hereinafter.

When synthesized by the methods described below, the crystalline material contains, in its as-synthesized condition, the organic material used as the directing agent. Prior to use as a catalyst component, the composition should be subjected to treatment to remove part or all of any organic constituent. Removal of the organic is necessary to permit introduction of the metal component either by exchange or impregnation, or both, since the organic component occluded in the pores of the crystalline phase, precludes access to the internal pore structure of the material.

The crystalline material, especially in its ammonium form, can be beneficially converted to another form by thermal treatment (calcination). This thermal treatment is generally performed by heating one of these forms at a temperature of at least 400°C for at least 1 minute and generally not longer than 20 hours, preferably from 1 to 10 hours. While subatmospheric pressure can be employed for the thermal treatment, atmospheric pressure is desired for reasons of convenience, such as in air, nitrogen, ammonia, etc. The thermal treatment can be performed at a temperature up to 750°C. The thermal treatment of the ammonium form in this way is an especially useful technique for the preparation of the hydrogen form of the catalytic material, to confer the acidic functionality of the final catalyst.

The crystalline material should be dehydrated, at least partially. This can be done by heating to a temperature in the range of 200° to 595°C in an atmosphere such as air, nitrogen, etc. and at atmospheric, subatmospheric or superatmospheric pressures for between 30 minutes and 48 hours. Dehydration can also be performed at room temperature merely by placing the composition in a vacuum, but a longer time is required to obtain a sufficient amount of dehydration.

The present crystalline material can be prepared by one of several methods, each with particular limitations.

A first method involves a reaction mixture having an $X_2O_3/YO_2$ mole ratio of from 0 to 0.5, but an $Al_2O_3/SiO_2$ mole ratio of from 0 to 0.01, a crystallization temperature of from 25° to 250°C, preferably from 50° to 175°C, and an organic directing agent, hereinafter more particularly described, or, preferably a combination of that organic directing agent plus an additional organic directing agent, hereinafter more particularly described. This first method comprises preparing a reaction mixture containing sources of, for example, alkali or alkaline earth metal (M), e.g. sodium or potassium, cation if desired, one or a combination of oxides selected from divalent element W, e.g. cobalt, trivalent element X, e.g. aluminum, tetravalent element Y, e.g. silicon, and pentavalent element Z, e.g. phosphorus, an organic (R) directing agent, hereinafter more particularly described, and a solvent or solvent mixture, such as, for example, $C_1$-$C_6$ alcohols, $C_1$-$C_6$ diols and/or water, especially water, the reaction mixture having a composition, in terms of mole ratios of oxides, within the following ranges:

| Reactants | Useful | Preferred |
|---|---|---|
| $X_2O_3/YO_2$ | 0 to 0.5 | 0.001 to 0.5 |
| $Al_2O_3/SiO_2$ | 0 to 0.01 | 0.001 to 0.01 |
| $X_2O_3/(YO_2+Z_2O_5)$ | 0.1 to 100 | 0.1 to 20 |
| $X_2O_3/(YO_2+WO+Z_2O_5)$ | 0.1 to 100 | 0.1 to 20 |
| Solvent/$(YO_2+WO+Z_2O_5+X_2O_3)$ | 1 to 1500 | 5 to 1000 |
| $OH^-/YO_2$ | 0 to 10 | 0 to 5 |
| $(M_{2/e}O+R_{2/f}O)/(YO_2+WO+Z_2O_5+X_2O_3)$ | 0.01 to 20 | 0.05 to 5 |
| $M_{2/e}O/(YO_2+WO+Z_2O_5+X_2O_3)$ | 0 to 10 | 0 to 5 |
| $R_{2/f}O/(YO_2+WO+Z_2O_5+X_2O_3)$ | 0.01 to 2.0 | 0.03 to 1.0 |

wherein e and f are the weighted average valences of M and R, respectively.

In this first method, when no Z and/or W oxides are added to the reaction mixture, the pH is important and must be maintained at from 9 to 14. When Z and/or W oxides are present in the reaction mixture, the pH is not narrowly important for synthesis of the present crystalline material. In this, as well as the following methods for synthesis of the present material the $R_{2/f}O/(YO_2+WO+Z_2O_5+X_2O_3)$ ratio is important. When this ratio is less than 0.01 or greater than 2.0, impurity products tend to be synthesized at the expense of the desired crystalline material.

A second method for synthesis of the present crystalline material involves a reaction mixture having an

$X_2O_3/YO_2$ mole ratio of from 0 to 0.5, a crystallization temperature of from 25° to 250°C, preferably from 50° to 175°C, and two separate organic directing agents, i.e. the organic and additional organic directing agents, hereinafter more particularly described. This second method comprises preparing a reaction mixture containing sources of, for example, alkali or alkaline earth metal (M), e.g. sodium or potassium, cation if desired, one or a combination of oxides selected from divalent element W, e.g. cobalt, trivalent element X, e.g. aluminum, tetravalent element Y, e.g. silicon, and pentavalent element Z, e.g. phosphorus, a combination of organic directing agent and additional organic directing agent (R), each hereinafter more particularly described, and a solvent or solvent mixture, such as, for example, $C_1$-$C_6$ alcohols, $C_1$-$C_6$ diols and/or water, especially water, the reaction mixture having a composition, in terms of mole ratios of oxides, within the following ranges:

| Reactants | Useful | Preferred |
|---|---|---|
| $X_2O_3/YO_2$ | 0 to 0.5 | 0.001 to 0.5 |
| $X_2O_3/(YO_2+Z_2O_5)$ | 0.1 to 100 | 0.1 to 20 |
| $X_2O_3/(YO_2+WO+Z_2O_5)$ | 0.1 to 100 | 0.1 to 20 |
| Solvent/$(YO_2+WO+Z_2O_5+X_2O_3)$ | 1 to 1500 | 5 to 1000 |
| $OH^-/YO_2$ | 0 to 10 | 0 to 5 |
| $(M_{2/e}O+R_{2/f}O)/(YO_2+WO+Z_2O_5+X_2O_3)$ | 0.01 to 20 | 0.05 to 5 |
| $M_{2/e}O/(YO_2+WO+Z_2O_5+X_2O_3)$ | 0 to 10 | 0 to 5 |
| $R_{2/f}O/(YO_2+WO+Z_2O_5+X_2O_3)$ | 0.1 to 2.0 | 0.12 to 1.0 |

wherein e and f are the weighted average valences of M and R, respectively.

In this second method, when no Z and/or W oxides are added to the reaction mixture, the pH is important and must be maintained at from about 9 to about 14. When Z and/or W oxides are present in the reaction mixture, the pH is not narrowly important for crystallization of the present invention.

A third method for synthesis of the present crystalline material is where X comprises aluminum and Y comprises silicon, the crystallization temperature must be from 25° to 175°C, preferably from 50° to 150°C, and an organic directing agent, hereinafter more particularly described, or, preferably a combination of that organic directing agent plus an additional organic agent, hereinafter more particularly described, is used. This third method comprises preparing a reaction mixture containing sources of, for example, alkali or alkaline earth metal (M), e.g. sodium or potassium, cation if desired, one or more sources of aluminum and/or silicon, an organic (R) directing agent, hereinafter more particularly described, and a solvent or solvent mixture, such as, for example $C_1$-$C_6$ alcohols, $C_1$-$C_6$ diols and/or water, especially water, the reaction mixture having a composition, in terms of mole ratios of oxides, within the following ranges:

| Reactants | Useful | Preferred |
|---|---|---|
| $Al_2O_3/SiO_2$ | 0 to 0.5 | 0.001 to 0.5 |
| Solvent/$SiO_2$ | 1 to 1500 | 5 to 1000 |
| $OH^-/SiO_2$ | 0 to 10 | 0 to 5 |
| $(M_{2/e}O+R_{2/f}O)/(SiO_2+Al_2O_3)$ | 0.01 to 20 | 0.05 to 5 |
| $M_{2/e}O/(SiO_2+Al_2O_3)$ | 0 to 5 | 0 to 3 |
| $R_{2/f}O/(SiO_2+Al_2O_3)$ | 0.01 to 2 | 0.03 to 1 |

wherein e and f are the weighted average valences of M and R, respectively.

In this third method, the pH is important and must be maintained at from 9 to 14. This method involves the following steps:

(1) Mix the organic (R) directing agent with the solvent or solvent mixture such that the mole ratio of solvent/$R_{2/f}O$ is within the range of from 50 to 800, preferably from 50 to 500. This mixture constitutes the "primary template" for the synthesis method.

(2) To the primary template mixture of step (1) add the sources of oxides, e.g. silica and/or alumina such that the ratio of $R_{2/f}O/(SiO_2+Al_2O_3)$ is within the range of from 0.01 to 2.0.

(3) Agitate the mixture resulting from step (2) at a temperature of from 20° to 40°C, preferably for from 5 minutes to 3 hours.

(4) Allow the mixture to stand with or without agitation, preferably at a temperature of from 20° to 100°C, and preferably for from 10 minutes to 24 hours.

(5) Crystallize the product from step (4) at a temperature of from 50° to 175°C, preferably for from 1 hour to 72 hours. Crystallization temperatures higher in the given ranges are most preferred.

A fourth method for the present synthesis involves the reaction mixture used for the third method, but the following specific procedure with tetraethylorthosilicate the source of silicon oxide:

(1) Mix the organic (R) directing agent with the solvent or solvent mixture such that the mole ratio of solvent/$R_{2/f}O$ is within the range of from 50 to 800, preferably from 50 to 500. This mixture constitutes the "primary template" for the synthesis method.

(2) Mix the primary template mixture of step (1) with tetraethylorthosilicate and a source of aluminum oxide, if desired, such that the $R_{2/f}O/SiO_2$ mole ratio is in the range of from 0.5 to 2.0.

(3) Agitate the mixture resulting from step (2) for from 10 minutes to 6 hours, preferably from 30 minutes to 2 hours, at a temperature of from 0° to 25°C, and a pH of less than 12. This step permits hydrolysis/polymerization to take place and the resultant mixture will appear cloudy.

(4) Crystallize the product from step (3) at a temperature of from 25° to 150°C, preferably from 95° to 110°C, for from 4 to 72 hours, preferably from 16 to 48 hours.

In each of the above methods, batch crystallization of the present crystalline material can be carried out under either static or agitated, e.g. stirred, conditions in a suitable reactor vessel, such as for example, polypropylene jars or teflon lined or stainless steel autoclaves. Crystallization may also be conducted continuously in suitable equipment. The total useful range of temperatures for crystallization is noted above for each method for a time sufficient for crystallization to occur at the temperature used, e.g. from 5 minutes to 14 days. Thereafter, the crystals are separated from the liquid and recovered.

When a source of silicon is used in the synthesis method, it is preferred to use at least in part an organic silicate, such as, for example, a quaternary ammonium silicate. Non-limiting examples of such a silicate include tetramethylammonium silicate and tetraethylorthosilicate.

By adjusting conditions of the synthesis reaction for each method, like temperature, pH and time of reaction, etc., within the above limits, embodiments of the present non-layered crystalline material with a desired average pore size may be prepared. In particular, changing the pH, the temperature or the reaction time may promote formation of product crystals with different average pore size.

Non-limiting examples of various combinations of W, X, Y and Z contemplated for the first and second synthesis methods of the present invention include:

| W | X | Y | Z |
|---|---|---|---|
| -- | Al | Si | -- |
| -- | Al | -- | P |
| -- | Al | Si | P |
| Co | Al | -- | P |
| Co | Al | Si | P |
| -- | -- | Si | -- |

including the combinations of W being Mg, or an element selected from the divalent first row transition metals, e.g. Mn, Co and Fe; X being B, Ga or Fe; and Y being Ge.

An organic directing agent for use in each of the above methods for synthesizing the present material from the respective reaction mixtures is an ammonium or phosphonium ion of the formula $R_1R_2R_3R_4Q^+$, i.e.:

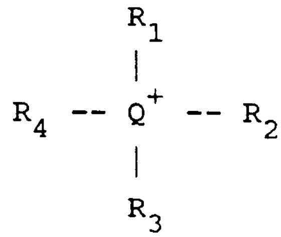

wherein Q is nitrogen or phosphorus and wherein at least one of $R_1$, $R_2$, $R_3$ and $R_4$ is aryl or alkyl of from 7 to 36 carbon atoms, e.g. $-C_7H_{13}$, $-C_{10}H_{21}$, $-C_{16}H_{33}$ and $-C_{18}H_{37}$, or combinations thereof, the remainder of $R_1$, $R_2$, $R_3$ and $R_4$ being selected from hydrogen, alkyl of from 1 to 5 carbon atoms and combinations thereof. The compound from which the above ammonium or phosphonium ion is derived may be, for example, the hydroxide, halide, silicate, or mixtures thereof.

In the first and third methods above it is preferred to have an additional organic directing agent and in the second method it is required to have a combination of the above organic directing agent and an additional organic directing agent. That additional organic directing agent is the ammonium or phosphonium ion of the above directing agent formula wherein $R_1$, $R_2$, $R_3$ and $R_4$ together or separately are selected from hydrogen and alkyl of 1 to 5 carbon atoms and combinations thereof. Any such combination of organic directing agents go to make up "R" and will be in molar ratio of 100/1 to 0.01/1, first above listed organic directing agent/additional organic directing agent.

The particular effectiveness of the presently required directing agent, when compared with other such agents known to direct synthesis of one or more other crystal structures, is believed due to its ability to function as a template in the above reaction mixture in the nucleation and growth of the desired ultra-large pore crystals with the limitations discussed above. Non-limiting examples of these directing agents include cetyltrimethylammonium, cetyltrimethylphosphonium, octadecyltrimethylphosphonium, benzyltrimethylammonium, cetylpyridinium, myristyltrimethylammonium, decyltrimethylammonium, dodecyltrimethylammonium and dimethyldidodecylammonium.

The reaction mixture components can be supplied by more than one source. The reaction mixture can be prepared either batchwise or continuously. Crystal size and crystallization time of the new crystalline material will vary with the nature of the reaction mixture employed and the crystallization conditions.

The crystals prepared by the instant invention can be shaped into a wide variety of particle sizes. Generally speaking, the particles can be in the form of a powder, a granule, or a molded product, such as an extrudate having particle size sufficient to pass through a 2 mesh (Tyler) screen and be retained on a 400 mesh (Tyler) screen. In cases where the catalyst is molded, such as by extrusion, the crystals can be extruded before drying or partially dried and then extruded.

In the present bifunctional catalysts, the crystalline material is at least partly in the hydrogen form which is suitably formed by the thermal treatment or calcination of the ammonium form, as described above. In addition, however, the catalysts include a metal component which provides hydrogenation-dehydrogenation functionality. The hydrogenation-dehydrogenation component may be provided by a single metal or combination of metals. Noble metals of Periods 5 and 6 of Group VIII, especially palladium, platinum, ruthenium, rhodium or base metals of Groups IVA, VIA and VIII, especially chromium, molybdenum, tungsten, cobalt and nickel, may be used for hydrogenative processes such as hydrotreating, hydrocracking, hydrodewaxing and the like whereas for dehydrogenative pocesses such as reforming the noble metals such as iridium, rhenium may be preferred, especially in the form of combinations such as platinum-iridium, platinum-rhenium and platinum-rhenium-iridium.

The combination of at least one Group VIA metal such as tungsten with at least one Group VIII metal such as nickel is particularly preferred for many applications, for example, combinations such as nickel-molybdenum, cobalt-nickel, nickel-tungsten, cobalt-nickel-molybdenum and nickel-tungsten-titanium.

The content of the metal component will vary according to its catalytic activity and to the requirements of the process in which the catalyst is to be used. Thus, the highly active noble metals may be used in smaller amounts than the less active base metals. For example, 0.1 wt % or less palladium or platinum will be effective and it will not normally be necessary to use more than 10 percent of the noble metals, and usually much less, for example, from 0.1 to 1 or 2 wt %. The amounts of base metals may be higher and it is a particular advantage of the present crystalline materials that their high porosity and high surface area permits large amounts of the metal component to be used without an unacceptable decrease in the surface area of the final catalyst. Thus, the amount of a base metal hydrogenation component will normally be at least 1 wt % and often more than 5% will be required. In a typical base metal combination, 5

to 15 wt % nickel and 5 to 40 wt % tungsten, expressed as metal will achieve the desired degree of hydrogenation functionality.

The present support materials are notable in that they are capable of including a greater proportion of metal than previous support materials because of their extraordinarily large surface area and as a result, the metal-containing catalysts retain a large surface area after incorporation of the metal component. The surface area, S, of the present catalysts, expressed in $m^2.g^{-1}$. (square meters per gram) may be given by the equation:

$$S \geqq 600 - 13.3X$$

where X is the metal loading in wt %.

Thus, the surface area of the metals-containing catalysts determined by empirical means such as the B-E-T (Bruenauer-Emmet-Teller) test (see ASTM D 3663), will be found to be at least as great as the value given by the above equation. The value of S as given by this realtionship decreases to zero at 45 percent metals content but since the surface area S may be greater than the value given by the relationship, surface area remains at metal loadings above this value. The minimum surface area will, however, be at least 5 $m^2g^{-1}$ at these very high metal loadings. The actual surface area of the metal-containing catalyst may, as noted above, be determined empirically by the method set out in ASTM D 3663.

As may be appreciated from the equation above, the surface area of the catalyst will be at least 200 $m^2g^{-1}$ even at high metal loadings as high as 30 wt % and at loadings above this value, remains at an unconventionally high value. The metal component usually exceeds 12.9 wt % (total metals, based on the entire catalyst weight) and may exceed about 25% and still maintain a high surface area above 200 $m^2$ $g^{-1}$. As shown below, the total metal content (i.e of the metal component) may exceed about 30 wt %, e.g. 30-40 wt %, of the entire catalyst while still retaining a surface area of at least 200 $m^2$ $g^{-1}$, e.g. 240 $m^2g^{-1}$ or even higher. At lower metal contents, the surface area will be correspondingly higher so that, for example, at a total metal content of about 20 wt % of the entire catalyst, the surface area will be at least 300 $m^2g^{-1}$ or higher, larger by a factor of almost three or more compared to conventional amorphous catalysts with similar metal loadings. At 12 to 15% total metal, e.g. 13 percent, the surface area will be at least 400 $m^2g^{-1}$. Catalysts containing at least about 25 wt % total metal with a retained surface area of at least 250 $m^2g^{-1}$ constitute a highly useful class of bifunctional catalysts.

Another advantage accruing from the use of the mesoporous supports is that in spite of the high metal loadings which may be accommodated, the density of the catalyst remains relatively low, compared to conventional catalysts. At a total metal content of 12 to 15 wt %, for example, e.g. at levels exceeding the normal minimum loading of 12.9%, the real density of the catalyst is about 2.8 $g.cc^{-1}$, as compared to conventional catalysts which have real densities of at least 4 at these loadings. At higher loadings, a similar advantage prevails: the present catalysts are only about three-fourths as dense as conventional catalysts at comparable metal loadings. For example, at metal loadings of 20 to 25 wt % of the entire catalyst, the real density will be in the range of 3.000 to 3.300 $g.cc^{-1}$, as compared to 4.00 to 4.2 for conventional catalysts. At metal loadings above 30 wt %, the real density will be in the range of 4.1 to 4.3 $g.cc^{-1}$, for example, at 35% metal, the real density is 4.2 $g.cc^{-1}$. Although one advantage of the high porosity is that the present catalysts have a low density as compared to conventional catalysts, the high porosity of the mesoporous support materials, on the other hand, permits very high metal loadings so that real densities up to 6.0 $g.cc.^{-1}$ may be achieved. Particle densities range from 0.88 at 12 to 15 wt % metal to 1.0 at 20 to 25 wt % metal and about 1.1 at 30 to 40 wt % metal. Real densities are determined by measuring the volume of mercury displaced by a given weight of catalyst. For a discussion of real and particle densities, see ASTM D 3766, which uses the term skeletal density as a synonym for real density.

Pore volumes are commensurately high: the present catalysts have a pore volume of at least 0.55 $cc.g^{-1}$ and usually higher, typically at least 0.6 $cc.g^{-1}$ at metal loadings as high as 20 wt %. Pore volumes are determined by subtracting the inverse of the real density from the inverse of the particle density.

The metal hydrogenation component may be introduced into the catalyst by way of co-crystallization with the crystalline material, exchanged onto the crystalline phase to the extent a Group IIIB element, e.g. aluminum, is in the structure, impregnated into it or intimately physically admixed with it. If the metal is to be exchanged onto the mesoporous support, it may be done by treatment with a cation of the metal, either a simple cation or a complex cation being suitable. Suitable platinum compounds, for example, include platinous chloride and various compounds containing the platinum ammine complex. Impregnation may be carried out with metal compounds in which the metal component is present in the cation or the anion of the compound. Palladium or platinum compounds in which the metal is in the form of a cation of cationic complex, e.g., $Pd(NH_3)_4Cl_2$ or $Pt(NH_3)_4Cl_2$ are particularly useful, as are anionic complexes such as the vanadate, molyodate and metatungstate ions and, in the case of platinum, chloroplatinic acid.

The hydrogenation component can be exchanged onto the support material, impregnated into it or physically admixed with it, or any combination of these methods. If the metal is to be impregnated into or exchanged onto the mesoporous support, it may be done, for example, by treating the calcined material with a metal-containing cation. A preferred exchange technique involves competitive exchange in the presence of ammonium cations (which are converted

into hydrogen on subsequent calcination); it is thought that this technique may disperse the metal cations more evenly throughout the pore structure of the support material. Metals which form stable anions are suitable for incorporation by impregnation; typical anionic complexes such as the molybdate, vanadate and metatungstate ions may be used to incorporate molybdenum, vanadium and tungsten. Other metals may be incorporated using suitable anionic complexes in the same way. Cationic forms of metals exchanged onto the crystalline material or impregnated into it. A particular advantage of the present catalysts is that the high loadings of two or more metals may be incorporated by a single impregnation onto the calcined material using the incipient wetness technique rather than successive impregnations with the different metals; this produces a more uniform distribution of the two or more metals in the catalyst. It is an additional advantage that the high metals levels, above about 25 wt % total metal may be incorporated by impregnation into the calcined material as distinct from the conventional techniques requiring incorporation of a solution of the metal components(s) into a hydrogel prior to calcination. The fact that the present catalysts have good bifunctional activity without the necessity for halogen promoter also enables the halogen promoter to be dispensed with; it need not be added during the manufacture of the catalyst or during operation of the process unless particularly high levels of acidity are desired.

It is normally preferred to use the crystalline material in a bound or matrixed form in which the crystalline material is composited with another material resistant to the temperatures and other conditions employed in organic conversion processes. Such materials include active and inactive materials and synthetic or naturally occurring zeolites as well as inorganic materials such as clays, silica and/or metal oxides such as alumina, titania and/or zirconia. The latter may be either naturally occurring or in the form of gelatinous precipitates or gels including mixtures of silica and metal oxides. Use of a material in conjunction with the new crystal, i.e. combined therewith or present during synthesis of the new crystal, which is active, tends to change the conversion and/or selectivity of the catalyst in certain organic conversion processes. Inactive materials suitably serve as diluents to control the amount of conversion in a given process so that products can be obtained economically and orderly without employing other means for controlling the rate of reaction. These materials may be incorporated with naturally occurring clays, e.g. bentonite and kaolin, to improve the crush strength of the catalyst under commercial operating conditions. Said materials, i.e. clays, oxides, etc., function as binders for the catalyst. It is desirable to provide a catalyst having good crush strength because in commercial use it is desirable to prevent the catalyst from breaking down into powder-like materials. These clay binders have been employed normally only for the purpose of improving the crush strength of the catalyst. The mesoporous material is usually composited with the matrix in amounts from 80:20 to 20:80 by weight, typically from 80:20 to 50:50 mesoporous material:matrix. Compositing may be done by conventional means including mulling the materials together followed by extrusion of pelletizing into the desired finished catalyst particles. Exchange of the metal into the crystalline material may take place before or after compositing with the binder but preferably is performed on the composited catalyst i.e. crystalline material plus binder. Impregnation will normally be carried out with the matrixed material. If the metal component is to be mixed with the other components of the catalyst, it may suitably be added to the muller with the crystalline material and the binder.

Naturally occurring clays which can be composited with the new crystal include the montmorillonite and kaolin family, which families include the subbentonites, and the kaolins commonly known as Dixie, McNamee, Georgia and Florida clays or others in which the main mineral constituent is halloysite, kaolinite, dickite, nacrite, or anauxite. Such clays can be used in the raw state as originally mined or initially subjected to calcination, acid treatment or chemical modification.

In addition to the foregoing materials, the new crystal can be composited with a porous matrix material such as silica-alumina, silica-magnesia, silica-zirconia, silica-thoria, silica-beryllia, silica-titania as well as ternary compositions such as Silica-alumina-thoria, silica-alumina-zirconia, silica-alumina-magnesia and silica-magnesia-zirconia.

It may be desirable to provide at least a part of the foregoing matrix materials in colloidal form so as to facilitate extrusion of the bound catalyst components(s).

The relative proportions of finely divided crystalline material and matrix material may vary widely, with the crystal content ranging from about 1 to about 90 percent by weight and more usually, particularly when the composite, in the range of about 10 to about 80 wt % of the composite.

The metal component may be introduced in to the catalyst by exchange, impregantion or mixing when the crystalline matrial is in the bound or unbound condition but normally it is preferred to add the metal to the bound catalyst.

The catalyst may be treated by conventional pre-sulfiding treatments, e.g. by heating in the presence of hydrogen sulfide, to convert oxide forms of the metals such as CoO or NiO to their corresponding sulfides prior to use in typical hydroprocessing operations.

The properties of typical hydroprocessing catalysts made with the mesoporous support materials and a nickel-tungsten hydrogenation component on an MCM-41/$Al_2O_3$ support (65% MCM-41, 35% binder) are set out in Table 1 below in a comparison with conventional type amorphous hydroprocessing catalysts.

Table 1

| Properties of NiW Catalysts | | | | | | |
|---|---|---|---|---|---|---|
| | MCM-41 (40 Å) | | | Fluorided Amorphous | | |
| Nickel, wt % | 3.7 | 3.4 | 5.8[1] | 5.6 | 4.6 | 4.2 |
| Tungsten, wt% | 9.2 | 16.4 | 29.1[1] | 17.3 | 23.8 | 19.2 |
| Total metal, wt. % | 12.9 | 19.8 | 34.92 | 22.9 | 28.4 | 23.4 |
| Pore Diam., Å | 58 | 59 | | 95 | 74 | 162 |
| Pore Vol. cc/gm | 0.780 | 0.634 | | 0.426 | 0.453 | 0.507 |
| Part Dens, g/cc | 0.883 | 1.037 | | 1.454 | 1.451 | 1.345 |
| Real Dens, g/cc | 2.837 | 3.027 | | 4.023 | 4.238 | 4.236 |
| Surface Area, $m^2 g^{-1}$ | 533 | 429 | 242 | 116 | 170 | 125 |
| Calculated Tungsten* Monolayer | | | | | | |
| Coverage,% | 0.25 | 0.51 | 1.32 | 1.4 | 1.35 | 1.46 |

* Tungsten trioxide surface area 24 Å as given in **J. Cat., 79,** 203, (1983).

The size of the pores of the crystalline materials is such that the spatiospecific selectivity with respect to transition state species is minimized in reactions such as cracking (Chen et al., "Shape Selective Catalysis in Industrial Applications", 36 CHEMICAL INDUSTRIES, pgs. 41-61 (1989) to which reference is made for a discussion of the factors affecting shape selectivity). Diffusional limitations are also minimized as a result of the very large pores in the present materials. For these reasons, the crystalline material is capable of catalyzing reactions which occur in the presence of acidic sites on the surface of the catalyst and which involve reactants, products or transitional state species which have large molecular sizes, too great for undergoing similar reactions with conventional large pore size solid catalysts, for example, large pore size zeolites such as zeolite X, Y, L, ZSM-4, ZSM-18, and ZSM-20. The present catalysts are therefore particularly useful for reactions with high-boiling hydrocarbons present; processes with high boiling feeds such as gas oils, residual fractions, lube boiling range fractions and the like are therefore particularly amenable to processing by the use of the present catalysts since feeds of this kind usually include significant quantities of molecules with bulky configurations which do not readily enter the pore structures of catalytic materials with smaller pore sizes or which are diffusion-restricted even if they are able to obtain access to the internal pore structure.

Thus, the present catalytic compositions containing the metal component will catalyze reactions such as hydrocracking, and other conversion reactions mediated by bifunctional catalysts with both acidic and hydrogenation- dehydrogenation functionality, as referred to above. The catalysts are particularly useful for processing hydrocarbon fractions obtained from petroleum refining, using hydrocarbon feeds of varying molecular sizes, but with particular applicability to feeds with large molecular sizes such as highly aromatic hydrocarbons with substituted or unsubstituted polycyclic aromatic components, bulky naphthenic compounds or highly substituted compounds with bulky steric configurations, e.g. molecular sizes of 1.3 nm (13 Angstroms) or more, or with fractions which contain long-chain components which would normally create diffusion limitations. Such feeds typically include residual fractions i.e. non-distillable fractions, and high boiling fractions such as fractions boiling above 650°F such as lube fractions.

The processes using the catalysts will be carried out under the conditions normally appropriate to the reaction using conventional catalysts such as zeolites. Thus, processes invoving a reduction in molecular weight by the cracking of hydrocarbons or substitituted hydrocarbons will be carried out at elevated temperatures typically above 150°C and usually above 200° or 300°C. Hydrocracking, for example, may suitably be conducted at a temperature of from 350° to 450°C, a pressure of from 100 psig to 3000 psig, and a weight hourly space velocity of from 0.1 $hr^{-1}$ to 10 $hr^{-1}$, with a hydrogen/hydrocarbon molar ratio of from 0.1 to 100. Exothermic processes such as hydrogenation and other processes where the predominant reaction is hydrogenation (hydrotreating, hydrofinishing), will normally be carried out at temperatures somewhat lower than those used in hydrocracking in order to favor the hydrogenation reactions which are thermodynamically favored by lower temperatures. Endothermic processes, like hydrocracking, are favored by rather higher temperatures; reforming, for example, will normally use temperatures of 450° to 510°C, as is conventional.

The present compositions may also be used for selective conversion of inorganic compounds such as oxides of nitrogen in mixtures of gases which contain nitrogen oxides ($NO_X$), for example, industrial exhaust gases and the

gases formed during the oxidative regeneration of catalysts used in the processing of hydrocarbons, especialy in catalytic cracking operations. The $NO_x$ reduction reaction is favored by the presence of metals such as vanadium, titanium and for this reaction, the presence of these metals is preferred.

The $NO_x$ reduction is suitably conducted by passing the gas containing the oxides of nitrogen over the catalyst at an elevated temperature, typically at least 200°C, and usually within the range of 200° to 600°C. The gas mixture may be mixed with ammonia to promote reduction of the oxides of nitrogen and pre-mixing may be conducted at a temperature of up to 200°C. The amount of ammonia which is mixed with the gas mixture is typically within the range of 0.75 to 1.25 the stoichiometric amount, which itself varies according to the ratio of the different oxides of nitrogen in the gas mixture, as shown by the equations:

$$6NO_2 + 8NH_3 = 7N_2 + 12H_2O \quad 6NO + 4NH_3 = 5N_2 + 6H_2O$$

The crystalline catalytic compositions of matter may also be used for the reduction of oxides of nitrogen in gaseous mixtures in the presence of other reducing agents such as carbon or carbon monoxide. Reduction of the oxides of nitrogen in this way is of particular utility in the regeneration of fluid catalytic cracking (FCC) catalysts, since regeneration under appropriate conditions will produce the required concentrations of carbon monoxide which may then be used to reduce the proportion of $NO_x$ in the regeneration gases in the presence of the catalyst. The porous crystalline material may be used in a matrixed or unmatrixed form for this purpose and may suitably be formed into extrudates, pellets or other shapes to permit the passage of gases over the catalyst with the minimum pressure drop.

The use of an ultra-large pore molecular sieve for hydrocracking, especially at low to moderate hydrogen pressure, provides an attractive option for obtaining kerosene and distillate selectivities which compare to state-of-the-art amorphous based catalysts. Benefits of utilizing these catalysts in processes of this kind include an increase in bottoms quality and a potential increase in stability, since molecular sieves have been shown to be more stable than amorphous catalysts. In addition, the very high surface area possessed by the present mesoporous supports materials is of especial benefit in fuels hydrocracking where the catalyst needs a high degree of acidic functionality to provide the cracking function. In conventional zeolitic hydrocracking catalysts, this would be provided by a high zeolite loading in the catalyst but for the fact that this would reduce the amount of matrix material available to support the metal function. The high surface area of the mesoporous supports, however, enables high metal loadings to be readily accommodated while still providing adequate acidic functionality.

Examples 1 to 19 below illustrate the preparation of the crystalline materials. In the examples, whenever sorption data are set forth for comparison of sorptive capacities for water, cyclohexane, benzene and/or n-hexane, they are Equilibrium Adsorption values determined as follows:

A weighed sample of the adsorbent, after calcination at 540°C for at least about 1 hour and other treatment, if necessary, to remove any pore blocking contaminants, is contacted with the desired pure adsorbate vapor in an adsorption chamber. The increase in weight of the adsorbent is calculated as the adsorption capacity of the sample in terms of grams/100 grams adsorbent based on adsorbent weight after calcination at 540°C. The present composition exhibits an equilibrium benzene adsorption capacity at 6.7 kPa (50 Torr) and 25°C of greater than 15 grams/100 grams, particularly greater than 17.5 g/100 g/ and more particularly greater than 20 g/100 g.

A preferred way to do this is to contact the desired pure adsorbate vapor in an adsorption chamber evacuated to less than 1 mm at conditions of 1.6 kPa (12 Torr) of water vapor, 5.3 kPa (40 Torr) of n-hexane or cyclohexane vapor, or 6.7 kPa (50 Torr) of benzene vapor, at 25°C. The pressure is kept constant (within about ± 0.5 mm) by addition of adsorbate vapor controlled by a manostat during the adsorption period. As adsorbate is adsorbed by the new crystal, the decrease in pressure causes the manostat to open a valve which admits more adsorbate vapor to the chamber to restore the above control pressures. Sorption is complete when the pressure change is not sufficient to activate the manostat.

Another way of doing this for benzene adsorption data is on a suitable thermogravimetric analysis system, such as a computer-controlled 990/951 duPont TGA system. The adsorbent sample is dehydrated (physically sorbed water removed) by heating at, for example, 350° or 500°C to constant weight in flowing helium. If the sample is in as-synthesized form, e.g. containing organic directing agents, it is calcined at 540°C in air and held to constant weight instead of the previously described 350° or 500°C treatment. Benzene adsorption isotherms are measured at 25°C by blending a benzene saturated helium gas stream with a pure helium gas stream in the proper proportions to obtain the desired benzene partial pressure. The value of the adsorption at 50 Torr of benzene is taken from a plot of the adsorption isotherm.

In the examples, percentages are by weight unless otherwise indicated.

Example 1

One hundred grams of cetyltrimethylammonium (CTMA) hydroxide solution, prepared by contacting a 29 wt %

N,N,N- trimethyl-1-hexadecanaminium chloride solution with a hydroxide-for-halide exchange resin, was combined with 100 grams of an aqueous solution of tetramethylammonium (TMA) silicate (10% silica) with stirring. Twenty-five grams of HiSil, a precipitated hydrated silica containing 6 wt % free water and 4.5 wt % bound water of hydration and having an ultimate particle size of 0.02 micron, was added. The resulting mixture was placed in a polypropylene bottle, which was kept in a steam box at 95°C overnight. The mixture had a composition in terms of moles per mole $Al_2O_3$:

2.7 moles $Na_2O$
392 moles $SiO_2$
35.7 moles $(CTMA)_2O$
61.7 moles $(TMA)_2O$
6231 moles $H_2O$

The resulting solid product was recovered by filtration and dried in air at ambient temperature. The product was then calcined at 540°C for 1 hour in nitrogen, followed by 6 hours in air.

The calcined product proved to have a surface area of 475 $m^2/g$ and the following equilibrium adsorption capacities in grams/100 grams:

| | |
|---|---|
| $H_2O$ | 8.3 |
| Cyclohexane | 22.9 |
| n-Hexane | 18.2 |
| Benzene | 21.5 |

The product of this example may be characterized by X-ray diffractiion as including a very strong relative intensity line at 37.8 ± 2.0 Å d-spacing, and weak lines at 21.6 ± 1.0 and 19.2 ± 1.0 Å. Transmission electron microscopy (TEM) produced images of a hexagonal arrangement of uniform pores and hexagonal electron diffraction pattern with a $d_{100}$ value of about 39 Å.

<u>Example 2</u>

One hundred grams of cetyltrimethylammonium (CTMA) hydroxide solution prepared as in Example 1 was combined with 100 grams of an aqueous solution of tetramethylammonium (TMA) hydroxide (25%) with stirring. Twenty-five grams of HiSil, a precipitated hydrated silica containing about 6 wt % free water and about 4.5 wt % bound water of hydration and having an ultimate particle size of about 0.02 micron, was added. The resulting mixture was placed in a static autoclave at 150°C overnight. The mixture had a composition in terms of moles per mole $Al_2O_3$:

2.7 moles $Na_2O$
291 moles $SiO_2$
35.7 moles $(CTMA)_2O$
102 moles $(TMA)_2O$
6120 moles $H_2O$

The resulting solid product was recovered by filtration and dried in air at ambient temperature. The product was then calcined at 540°C for 1 hour in nitrogen, followed by 6 hours in air.

The calcined product proved to have a surface area of 993 $m^2/g$ and the following equilibrium adsorption capacities in grams/100 grams:

| | |
|---|---|
| $H_2O$ | 7.1 |
| Cyclohexane | 47.2 |
| n-Hexane | 36.2 |
| Benzene | 49.5 |

The X-ray diffraction pattern of the calcined product may be characterized as including a very strong relative intensity line at 39.3 ± 2.0 Å d-spacing, and weak lines at 22.2 ± 1.0 and 19.4 ± 1.0 Å. TEM indicated that the product contained the ultra-large pore material.

A portion of the above product was then contacted with 100% steam at 788°C (1450°F) for two hours. The surface area of the steamed material was measured to be 440 $m^2/g$, indicating that 45% was retained following severe steaming.

Another portion of the calcined product of this example was contacted with 100% steam at 677°C (1250°F) for two hours. The surface area of this material was measured to be 718 $m^2/g$, indicating that 72% was retained after steaming at these conditions.

Example 3

Water, cetyltrimethylammonium hydroxide solution prepared as in Example 1, aluminum sulfate, HiSil and an aqueous solution of tetrapropylammonium (TPA) bromide (35%) were combined to produce a mixture having a composition in terms of moles per mole $Al_2O_3$:

0.65 moles $Na_2O$
65 moles $SiO_2$
8.8 moles $(CTMA)_2O$
1.22 moles $(TPA)_2O$
1336 moles $H_2O$

The resulting mixture was placed in a polypropylene bottle, which was kept in a steam box at 95°C for 192 hours. The sample was then cooled to room temperature and combined with CTMA hydroxide solution prepared as in Example 1 and TMA hydroxide (25% by weight) in the weight ratio of 3 parts mixture, 1 part CTMA hydroxide and 2 parts TMA hydroxide. The combined mixture was then placed in a polypropylene bottle and kept in a steam box at 95°C overnight. The combined mixture had a composition in terms of moles per mole $Al_2O_3$:

0.65 moles $Na_2O$
65 moles $SiO_2$
15 moles $(CTMA)_2O$
1.22 moles $(TPA)_2O$
35.6 moles $(TMA)_2O$
2927 moles $H_2O$

The resulting solid product was recovered by filtration and dried in air at ambient temperature. The product was then calcined at 540°C for 1 hour in nitrogen, followed by 6 hours in air.

The calcined product proved to have a surface area of 1085 $m^2/g$ and the following equilibrium adsorption capacities in grams/100 grams:

| | |
|---|---|
| $H_2O$ | 11.5 |
| Cyclohexane | > 50 |
| n-Hexane | 39.8 |
| Benzene | 62 |

The X-ray diffraction pattern of the calcined product of this example may be characterized as including a very strong relative intensity line at 38.2 ± 2.0 Å d-spacing, and weak lines at 22.2 ± 1.0 and 19.4 ± 1.0 Å. TEM indicated the product contained the ultra-large pore material.

Example 4

Two hundred grams of cetyltrimethylammonium (CTMA) hydroxide solution prepared as in Example 1 was combined with 2 grams of Catapal alumina (alpha-alumina monohydrate, 74% alumina) and 100 grams of an aqueous solution of tetramethylammonium (TMA) silicate (10% silica) with stirring. Twenty-five grams of HiSil, a precipitated

hydrated silica containing about 6 wt % free water and 4.5 wt % bound water of hydration and having an ultimate particle size of 0.02 micron, was added. The resulting mixture was placed in a static autoclave at 150°C for 48 hours. The mixture had a composition in terms of moles per mole $Al_2O_3$:

0.23 moles $Na_2O$
33.2 moles $SiO_2$
6.1 moles $(CTMA)_2O$
5.2 moles $(TMA)_2O$
780 moles $H_2O$

The resulting solid product was recovered by filtration and dried in air at ambient temperature. The product was then calcined at 540°C for 1 hour in nitrogen, followed by 6 hours in air.

The calcined product proved to have a surface area of 1043 $m^2/g$ and the following equilibrium adsorption capacities in grams/100 grams:

| | |
|---|---|
| $H_2O$ | 6.3 |
| Cyclohexane | > 50 |
| n-Hexane | 49.1 |
| Benzene | 66.7 |

The X-ray diffraction pattern of the calcined product of this example may be characterized as including a very strong relative intensity line at 40.8 ± 2.0 Å d-spacing, and weak lines at 23.1 ± 1.0 and 20.1 ± 1.0 Å. TEM indicated that the product contained the ultra-large pore material.

Example 5

Two-hundred sixty grams of water was combined with 77 grams of phosphoric acid (85%), 46 grams of Catapal alumina (74% alumina), and 24 grams of pyrrolidine (Pyr) with stirring. This first mixture was placed in a stirred autoclave and heated to 150°C for six days. The material was filtered, washed and air-dried. Fifty grams of this product was slurried with 200 grams of water and 200 grams of cetyltrimethylammonium hydroxide solution prepared as in Example 1. Four hundred grams of an aqueous solution of tetraethylammonium silicate (10% silica) was then added to form a second mixture which was placed in a polypropylene bottle and kept in a steam box at 95°C overnight. The first mixture had a composition in terms of moles per mole $Al_2O_3$:

1.0 moles $P_2O_5$
0.51 moles $(Pyr)_2O$
47.2 moles $H_2O$

The resulting solid product was recovered by filtration and dried in air at ambient temperature. The product was then calcined at 540°C for 1 hour in nitrogen, followed by 6 hours in air.

The calcined product proved to have a surface area of 707 $m^2/g$ and the following equilibrium adsorption capacities in grams/100 grams:

| | |
|---|---|
| $H_2O$ | 33.2 |
| Cyclohexane | 19.7 |
| n-Hexane | 20.1 |
| Benzene | 23.3 |

The X-ray diffraction pattern of the calcined product may be characterized as including a very strong relative intensity line at 25.4 ± 1.5 Å d-spacing. TEM indicated the product contained the present ultra-large pore material (see

Example 23).

Example 6

A solution of 1.35 grams of $NaAlO_2$ (43.5% $Al_2O_3$, 30% $Na_2O$) dissolved in 45.2 grams of water was mixed with 17.3 grams of NaOH, 125.3 grams of colloidal silica (40%, Ludox HS-40) and 42.6 grams of 40% aqueous solution of tetraethylammonium (TEA) hydroxide. After stirring overnight, the mixture was heated for 7 days in a steam box (95°C). Following filtration, 151 grams of this solution was mixed with 31 grams of cetyltrimethylammonium hydroxide solution prepared as in Example 1 and stored in the steam box at 95°C for 13 days. The mixture had the following relative molar composition:

0.25 moles $Al_2O_3$
10 moles $Na_2O$
36 moles $SiO_2$
0.95 moles $(CTMA)_2O$
2.5 moles $(TEA)_2O$
445 moles $H_2O$

The resulting solid product was recovered by filtration and washed with water and ethanol. The product was then calcined at 540°C for 1 hour in nitrogen, followed by 6 hours in air.

The calcined product composition included 0.14 wt % Na, 68.5 wt % $SiO_2$ and 5.1 wt % $Al_2O_3$, and proved to have a benzene equilibrium adsorption capacity of 58.6 grams/100 grams.

The X-ray diffraction pattern of the calcined product may be characterized as including a very strong relative intensity line at 31.4 ± 1.5 Å d-spacing. TEM indicated that the product contained the present ultra-large pore material.

Example 7

A mixture of 300 grams of cetyltrimethylammonium (CTMA) hydroxide solution prepared as in Example 1 and 41 grams of colloidal silica (40%, Ludox HS-40) was heated in a 600 cc autoclave at 150°C for 48 hours with stirring at 200 rpm. The mixture has a composition in terms of moles per mole $SiO_2$:

0.5 mole $(CTMA)_2O$
46.5 moles $H_2O$

The resulting solid product was recovered by filtration, washed with water, then calcined at 540°C for 1 hour in nitrogen, followed by 10 hours in air.

The calcined product composition included less than 0.01 wt % Na, 98.7 wt % $SiO_2$ and 0.01 wt % $Al_2O_3$, and proved to have a surface area of 896 $m^2/g$. The calcined product had the following equilibrium adsorption capacities in grams/100 grams:

| | |
|---|---|
| $H_2O$ | 8.4 |
| Cyclohexane | 49.8 |
| n-Hexane | 42.3 |
| Benzene | 55.7 |

The X-ray diffraction pattern of the calcined product of this example may be characterized as including a very strong relative intensity line at 40.0 ± 2.0 Å d-spacing and a weak line at 21.2 ± 1.0 Å. TEM indicated that the product of this example contained at least three separate phases, one of which was the ultra-large pore material.

Example 8

A mixture of 150 grams of cetyltrimethylammonium (CTMA) hydroxide solution prepared as in Example 1 and 21 grams of colloidal silica (40%, Ludox HS-40) with an initial pH of 12.64 was heated in a 300 cc autoclave at 150°C for 48 hours with stirring at 200 rpm. The mixture had a composition in terms of moles per mole $SiO_2$:

0.5 mole $(CTMA)_2O$
46.5 moles $H_2O$

The resulting solid product was recovered by filtration, washed with water, then calcined at 540°C for 6 hours in air.

The calcined product composition was measured to include 0.01 wt % Na, 93.2 wt % $SiO_2$ and 0.016 wt % $Al_2O_3$, and proved to have a surface area of 992 $m^2/g$ and the following equilibrium adsorption capacities in grams/100 grams:

| | |
|---|---|
| $H_2O$ | 4.6 |
| Cyclohexane | > 50 |
| n-Hexane | > 50 |
| Benzene | 62.7 |

The X-ray diffraction pattern of the calcined product may be characterized as including a very strong relative intensity line at 43.6 ± 2.0 Å d-spacing and weak lines at 25.1 ± 1.5 and 21.7 ± 1.0 Å. TEM indicated that the product contained the ultra-large pore material.

Example 9

Sodium aluminate (4.15g) was added slowly into a solution containing 16g of myristyltrimethylammonium bromide ($C_{14}$TMABr) in 100g of water. Tetramethylammonium silicate (100g-10% $SiO_2$), HiSil (25g) and tetramethylammonium hydroxide (14.2g-25% solution) were then added to the mixture. The mixture was crystallized in an autoclave at 120°C with stirring for 24 hours.

The product was filtered, washed and air dried. Elemental analysis showed the product contained 53.3 wt% $SiO_2$, 3.2 wt% $Al_2O_3$, 15.0 wt% C, 1.88 wt% N, 0.11 wt% Na and 53.5 wt% ash at 1000°C. The X-ray diffraction pattern of the material after calcination at 540°C for 1 hour in $N_2$ and 6 hours in air includes a very strong relative intensity line at 35.3 ± 2.0 Å d-spacing and weak lines at 20.4 ± 1.0 and 17.7 ± 1.0 Å d-spacing. TEM indicated that the product contained the ultra-large pore material.

The washed product, having been exchanged with 1N ammonium nitrate solution at room temperature, then calcined, proved to have a surface area of 827 $m^2/g$ and the following equilibrium adsorption capacities in g/100g anhydrous sorbent:

| | |
|---|---|
| $H_2O$ | 30.8 |
| Cyclohexane | 33.0 |
| n-Hexane | 27.9 |
| Benzene | 40.7 |

Example 10

Sodium aluminate (8.3g) was added slowly into a solution containing 184g of dodecyltrimethylammonium hydroxide ($C_{12}$TMAOH, 50%) solution diluted with 480g of water. UltraSil♦ (50g) and an aqueous solution of tetramethylammonium silicate (200g-10% $SiO_2$) and tetramethylammonium hydroxide (26.38g-25% solution) were then added to the mixture. The mixture was crystallized in an autoclave at 100°C with stirring for 24 hours.

The product was filtered, washed and air dried. After calcination at 540°C for 1 hour in $N_2$ and 6 hours in air, the X-ray diffraction pattern includes a very strong relative intensity line at 30.4 ± 1.5 Å d-spacing and weak lines at 17.7 ± 1.0 and 15.3 ± 1.0 Å d-spacing. TEM indicated that the product contained the ultra-large pore material.

The washed product, having been exchanged with 1N ammonium nitrate solution at room temperature, then calcined, proved to have a surface area of 1078 $m^2/g$ and the following equilibrium adsorption capacities in g/100g anhydrous sorbent:

| | |
|---|---|
| $H_2O$ | 32.6 |
| Cyclohexane | 38.1 |
| n-Hexane | 33.3 |
| Benzene | 42.9 |

Example 11

A solution of 4.9 grams of $NaAlO_2$ (43.5 % $Al_2O_3$, 30% $NaO_2$) in 37.5 grams of water was mixed with 46.3 cc of 40% aqueous tetraethylammonium hydroxide solution and 96 grams of colloidal silica (40%, Ludox HS-40). The gel was stirred vigorously for 0.5 hour, mixed with an equal volume (150 ml) of cetyltrimethylammonium hydroxide solution prepared as in Example 1 and reacted at 100°C for 168 hours. The mixture had the following composition in terms of moles per mole $Al_2O_3$:

1.1 moles $Na_2O$
30.6 moles $SiO_2$
3.0 moles $(TEA)_2O$
3.25 moles $(CTMA)_2O$
609 moles $H_2O$

The resulting solid product was recovered by filtration, washed with water then calcined at 540°C for 16 hours in air. The calcined product proved to have a surface area of 1352 $m^2/g$ and the following equilibrium adsorption capacities in grams/100 grams:

| | |
|---|---|
| $H_2O$ | 23.6 |
| Cyclohexane | >50 |
| n-Hexane | 49 |
| Benzene | 67.5 |

The X-ray diffraction pattern of the calcined product may be characterized as including a very strong relative intensity line at 38.5 ± 2.0 Å d-spacing and a weak line at 20.3 ± 1.0 Å. TEM indicated that the product contained the ultra-large pore material.

Example 12

Two hundred grams of cetyltrimethylammonium (CTMA) hydroxide solution prepared as in Example 1 was combined with 4.15 grams of sodium aluminate and 100 grams of aqueous tetramethylammonium (TMA) silicate solution (10% silica) with stirring. Twenty-five grams of HiSil, a precipitated hydrated silica containing 6 wt % free water and 4.5 wt % bound water of hydration and having an ultimate particle size of 0.02 micron, was added. The resulting mixture was placed in a static autoclave at 150°C for 24 hours. The mixture had a composition in terms of moles per mole $Al_2O_3$:

1.25 moles $Na_2O$
27.8 moles $SiO_2$
5.1 moles $(CTMA)_2O$
4.40 moles $(TMA)_2O$
650 moles $H_2O$

The resulting solid product was recovered by filtration and dried in air at ambient temperature. The product was then calcined at 540°C for 1 hour in nitrogen, followed by 6 hours in air. TEM indicated that this product contained the ultra-large pore material. The X-ray diffraction pattern of the calcined product of this example can be characterized as

including a very strong relative intensity line at 44.2 ± 2.0 Å d-spacing and weak lines at 25.2 ± 1.5 and 22.0 ± 1.0 Å.

The calcined product proved to have a surface area of 932 $m^2/g$ and the following equilibrium adsorption capacities in grams/100 grams:

| | |
|---|---|
| $H_2O$ | 39.3 |
| Cyclohexane | 46.6 |
| n-Hexane | 37.5 |
| Benzene | 50 |

Example 13

Two hundred grams of cetyltrimethylammonium (CTMA) hydroxide solution prepared as in Example 1 was combined with 4.15 grams of sodium aluminate and 100 grams of aqueous tetramethylammonium (TMA) silicate solution (10% silica) with stirring. Twenty-five grams of HiSil, a precipitated hydrated silica containing 6 wt % free water and 4.5 wt % bound water of hydration and having an ultimate particle size of about 0.02 micron, was added. The resulting mixture was placed in a steam box at 100°C for 48 hours. The mixture had a composition in terms of moles per mole $Al_2O_3$:

1.25 moles $Na_2O$
27.8 moles $SiO_2$
5.1 moles $(CTMA)_2O$
4.4 moles $(TMA)_2O$
650 moles $H_2O$

The resulting solid product was recovered by filtration and dried in air at ambient temperature. The product was then calcined at 540°C for 1 hour in nitrogen, followed by 6 hours in air. The calcined product proved to have the following equilibrium adsorption capacities in grams/100 grams:

| | |
|---|---|
| $H_2O$ | 35.2 |
| Cyclohexane | > 50 |
| n-Hexane | 40.8 |
| Benzene | 53.5 |

The X-ray diffraction pattern of the calcined product may be characterized as including a very strong relative intensity line at 39.1 ± 2.0 Å d-spacing and weak lines at 22.4 ± 1.0 and 19.4 ± 1.0 Å. TEM indicated that this product contained the ultra-large pore material.

Example 14

A mixture of 125 grams of 29% CTMA chloride aqueous solution, 200 grams of water, 3 grams of sodium aluminate (in 50 grams $H_2O$), 65 grams of Ultrasil, amorphous precipitated silica available from PQ Corporation, and 21 grams NaOH (in 50 grams $H_2O$) was stirred thoroughly and crystallized at 150°C for 168 hours. The reaction mixture had the following relative molar composition in terms of moles per mole silica:

0.10 moles $(CTMA)_2O$
21.89 moles $H_2O$
0.036 moles $NaAlO_2$
0.53 moles NaOH

The solid product was isolated by filtration, washed with water, dried for 16 hours at room temperature and

calcined at 540°C for 10 hours in air. The calcined product proved to have a surface area of 840 $m^2/g$, and the following equilibrium adsorption capacities in grams/100 grams:

| | |
|---|---|
| $H_2O$ | 15.2 |
| Cyclohexane | 42.0 |
| n-Hexane | 26.5 |
| Benzene | 62 |

The X-ray diffraction pattern of the calcined product may be characterized as including a very strong relative intensity line at 40.5 ± 2.0 Å d-spacing. TEM indicated that the product contained the ultra-large pore material.

Example 15

To make the primary template mixture for this example, 240 grams of water was added to a 92 gram solution of 50% dodecyltrimethylammonium hydroxide, 36% isopropyl alcohol and 14% water such that the mole ratio of Solvent/$R_{2/f}O$ was 155. The mole ratio of $H_2O/R_{2/f}O$ in this mixture was 149 and the IPA/$R_{2/f}O$ mole ratio was 6. To the primary template mixture was added 4.15 grams of sodium aluminate, 25 grams of HiSil, 100 grams of aqueous tetramethylammonium silicate solution (10% $SiO_2$) and 13.2 grams of 25% aqueous tetramethylammonium hydroxide solution. The mole ratio of $R_{2/f}O/(SiO_2+Al_2O_3)$ was 0.28 for the mixture.

This mixture was stirred at 25°C for 1 hour. The resulting mixture was then placed in an autoclave at 100°C and stirred at 100 rpm for 24 hours. The mixture in the autoclave had the following relative molar composition in terms of moles per mole $SiO_2$:

0.05 mole $Na_2O$
0.036 mole $Al_2O_3$
0.18 mole $(C_{12}TMA)_2O$
0.12 mole $(TMA)_2O$
36.0 moles $H_2O$
1.0 mole IPA

The resulting solid product was recovered by filtration, washed with water and dried in air at ambient temperature. The product was then calcined at 540°C for 1 hour in nitrogen, followed by 6 hours in air.

The calcined product proved to have a surface area of 1223 $m^2/g$ and the following equilibrium adsorption capacities in grams/100 grams:

| | |
|---|---|
| $H_2O$ | 25.5 |
| Cyclohexane | 41.1 |
| n-Hexane | 35.1 |
| Benzene | 51 |

The X-ray diffraction pattern of the calcined product may be characterized as including a very strong relative intensity line at 30.8 ± 1.5 Å d-spacing and weak lines at 17.9 ± 1.0 and 15.5 ± 1.0 Å. TEM indicated this product to contain the ultra-large pore material.

Example 16

A 50.75 gram quantity of decyltrimethylammonium hydroxide (prepared by contacting a ca. 29 wt % solution of decyltrimethylammonium bromide with a hydroxide-for-halide exchange resin) was combined with 8.75 grams of tetraethylorthosilicate. The mixture was stirred for about 1 hour and then transferred to a polypropylene jar which was then placed in a steambox for about 24 hours. The mixture had a composition in terms of moles per mole $SiO_2$:

0.81 mole $(C_{10}TMA)_2O$
47.6 moles $H_2O$

The resulting solid product was filtered and washed several times with warm (60°-70°C) distilled water and with acetone. The final product was calcined to 538°C in $N_2$/air mixture and then held in air for about 8 hours. The calcined product proved to have a surface area of 915 $m^2$/g and an equilibrium benzene adsorption capacity of 35 grams/100 grams. Argon physisorption data indicated an argon uptake of 0.34 cc/gram, and a pore size of 15 Å.

The X-ray diffraction pattern of the calcined product of this example may be characterized as including a very strong relative intensity line at 27.5 ± 1.5 Å d-spacing and weak lines at 15.8 ± 1.0 and 13.7 ± 1.0 Å. TEM indicated that the product of this example contained the ultra-large pore material.

Example 17

To eighty grams of cetyltrimethylammonium hydroxide (CTMAOH) solution prepared as in Example 1 was added 1.65 grams of $NaAlO_2$. The mixture was stirred at room temperature until the $NaAlO_2$ was dissolved. To this solution was added 40 grams of aqueous tetramethylammonium (TMA) silicate solution (10 wt % $SiO_2$), 10 grams of HiSil, 200 grams of water and 70 grams of 1,3,5-trimethylbenzene (mesitylene). The resulting mixture was stirred at room temperature for several minutes. The gel was then loaded into a 600 cc autoclave and heated at 105°C for sixty-eight hours with stirring at 150 rpm. The mixture had a composition in terms of moles per mole $Al_2O_3$:

1.25 moles $Na_2O$
27.8 moles $SiO_2$
5.1 moles $(CTMA)_2O$
2.24 moles $(TMA)_2O$
2256 moles $H_2O$
80.53 moles 1,3,5-trimethylbenzene

The resulting product was filtered and washed several times with warm (60°-70°C) distilled water and with acetone. The final product was calcined to 538°C in $N_2$/air mixture and then held in air for about 10 hours. The calcined product proved to have an equilbrium benzene adsorption capacity of >25 grams/100 grams.

The X-ray diffraction pattern of the calcined product may be characterized as including a broad, very strong relative intensity line at about 102 Å d-spacing, but accurate positions of lines in the extreme low angle region of the X-ray diffraction pattern are very difficult to determine with conventional X-ray diffractometers. Furthermore, finer collimating slits were required to resolve a peak at this low 2-theta angle. The slits used in this example, starting at the X-ray tube, were 0.1, 0.3, 0.5 and 0.2 mm, respectively. TEM indicated that the product of this example contained several materials with different $d_{100}$ values as observed in their electron diffraction patterns. These materials were found to possess $d_{100}$ values between 85 Å d-spacing and 120 Å d-spacing.

Example 18

To eighty grams of cetyltrimethylammonium hydroxide (CTMAOH) solution prepared as in Example 1 was added 1.65 grams of $NaAlO_2$. The mixture was stirred at room temperature until the $NaAlO_2$ was dissolved. To this solution was added 40 grams of aqueous tetramethylammonium (TMA) silicate solution (10 wt % $SiO_2$), 10 grams of HiSil, 200 grams of water and 120 grams of 1,3,5-trimethylbenzene (mesitylene). The resulting mixture was stirred at room temperature for several minutes. The gel was then loaded into a 600 cc autoclave and heated at 105°C for ninety hours with stirring at 150 rpm. The mixture had a composition in terms of moles per mole $Al_2O_3$:

1.25 moles $Na_2O$
27.8 moles $SiO_2$
5.1 moles $(CTMA)_2O$
2.24 moles $(TMA)_2O$
2256 moles $H_2O$
132.7 moles 1,3,5-trimethylbenzene

The resulting product was filtered and washed several times with warm (60°-70°C) distilled water and with acetone. The final product was calcined to 538°C in $N_2$/air mixture and then held in air for 10 hours. The calcined product proved to have a surface area of 915 $m^2$/g and an equilbrium benzene adsorption capacity of >25 grams/100 grams. Argon physisorption data indicated an argon uptake of 0.95 cc/gram, and a pore size centered on 78 Å (Dollimore-Heal

Method, see Example 19(b)), but running from 70 to greater than 105 Å. The X-ray diffraction pattern of the calcined product of this example may be characterized as having only enhanced scattered intensity in the very low angle region of the X-ray diffraction, where intensity from the transmitted incident X-ray beam is usually observed. However, TEM indicated that the product contained several materials with different $d_{100}$ values as observed in their electron diffraction patterns. These materials were found to possess $d_{100}$ values between 85 Å d-spacing and 110 Å d-spacing.

Example 19

To eighty grams of cetyltrimethylammonium hydroxide (CTMAOH) solution prepared as in Example 1 was added 1.65 grams of $NaAlO_2$. The mixture was stirred at room temperature until the $NaAlO_2$ was dissolved. To this solution was added 40 grams of aqueous tetramethylammonium (TMA) silicate solution (10 wt % $SiO_2$), 10 grams of HiSil, and 18 grams of 1,3,5-trimethylbenzene (mesitylene). The resulting mixture was stirred at room temperature for several minutes. The gel was then loaded into a 300 cc autoclave and heated at 105°C for four hours with stirring at 150 rpm. The mixture had a composition in terms of moles per mole $Al_2O_3$:

1.25 moles $Na_2O$
27.8 moles $SiO_2$
5.1 moles $(CTMA)_2O$
2.24 moles $(TMA)_2O$
650 moles $H_2O$
19.9 moles 1,3,5-trimethylbenzene

The resulting product was filtered and washed several times with warm (60°-70°C) distilled water and with acetone. The final product was calcined to 538°C in $N_2$/air mixture and then held in air for about 8 hours.

The calcined product proved to have a surface area of 975 $m^2/g$ and an equilibrium benzene adsorption capacity of >40 grams/100 grams. Argon physisorption data indicated an argon uptake of 0.97 cc/gram, and a pore size of 63 Å (Dollimore-Heal Method), with the peak occurring at $P/P_o=0.65$.

The X-ray diffraction pattern of the calcined product of this example may be characterized as including a very strong relative intensity line at 63 ± 5 Å d-spacing and weak lines at 36.4 ± 2.0, 31.3 ± 1.5 Å and 23.8 ± 1.0 Å d-spacing. TEM indicated that the product of this example contained the ultra-large pore material.

Example 20

Argon Physisorption Determination

To determine the pore diameters of the mesoporous products with pores up to 60 Å in diameter, 0.2 gram samples of the products of Examples 1 through 17 were placed in glass sample tubes and attached to a physisorption apparatus as described in U.S. Patent No. 4,762,010.

The samples were heated to 300°C for 3 hours in vacuo to remove adsorbed water. Thereafter, the samples were cooled to 87°K by immersion of the sample tubes in liquid argon. Metered amounts of gaseous argon were then admitted to the samples in stepwise manner as described in U.S. Patent No. 4,762,010, column 20. From the amount of argon admitted to the samples and the amount of argon left in the gas space above the samples, the amount of argon adsorbed can be calculated. For this calculation, the ideal gas law and the calibrated sample volumes were used. (See also S.J. Gregg et al., Adsorption, Surface Area and Porosity, 2nd ed., Academic Press, 1982). In each instance, a graph of the amount adsorbed versus the relative pressure above the sample, at equilibrium, constitutes the adsorption isotherm. It is common to use relative pressures which are obtained by forming the ratio of the equilibrium pressure and the vapor pressure $P_o$ of the adsorbate at the temperature where the isotherm is measured. Sufficiently small amounts of argon were admitted in each step to generate 168 data points in the relative pressure range from 0 to 0.6. At least 100 points are required to define the isotherm with sufficient detail.

The step (inflection) in the isotherm, indicates filling of a pore system. The size of the step indicates the amount adsorbed, whereas the position of the step in terms of $P/P_o$ reflects the size of the pores in which the adsorption takes place. Larger pores are filled at higher $P/P_o$. In order to better locate the position of the step in the isotherm, the derivative with respect to log $(P/P_o)$ is formed. The adsorption peak (stated in terms of log $(P/P_o)$) may be related to the physical pore diameter (Å) by the following formula:

$$\log(P/P_o) = \frac{K}{d-0.38}\left[\frac{S^4}{3(L-D/2)^3} - \frac{S^{10}}{9(L-D/2)^9} - \frac{S^4}{3(D/2)^3} + \frac{S^{10}}{9(D/2)^9}\right]$$

where d = pore diameter in nanometers, K = 32.17, S = 0.2446, L = d + 0.19 , and D = 0.57.

This formula is derived from the method of Horvath and Kawazoe (G. Horvath et al., J. Chem. Eng. Japan, 16 (6) 470(1983)). The constants required for the implementation of this formula were determined from a measured isotherm of ALPO-5 and its known pore size. This method is particularly useful for microporous materials having pores of up to 60 Å in diameter.

The results of this procedure for the samples from Examples 1 through 16 are tabulated below. The samples from Examples 10, 13 and 15 gave two separate peaks, believed to be the result of two separate ultra-large pore phases in the products.

| Examples | Pore Diameter, Å |
|---|---|
| 1 | 32.2 |
| 2 | 35.4 |
| 3 | 42.5 |
| 4 | 39.6 |
| 5 | 16.9 |
| 6 | 27.3 |
| 7 | 36.6 |
| 8 | 42.6 |
| 9 | 28.3 |
| 10 | 22.8, 30.8 |
| 11 | 36.8 |
| 12 | 36.1 |
| 13 | 35.0, 42.1 |
| 14 | 40.0 |
| 15 | 22.4, 30.4 |
| 16 | 15.0 |

By way of comparison, a commercially prepared sample of zeolite USY (equilibrium benzene sorption capacity of 20.7 grams/100 grams, X-ray diffraction pattern with all the lines of zeolite Y and with the highest d-spacing at 14 Å) had a pore diameter of 8.3 Å as determined by the above method.

The method of Horvath and Kawazoe for determining pore size from physisorption isotherms was intended to be applied to pore systems of up to 20 Å diameter; but with some care as above detailed, its use can be extended to pores of up to 60 Å diameter.

In the pore regime above 60 Å diameter, the Kelvin equation can be applied. It is usually given as:

$$\ln(P/P_o) = \frac{-2\gamma V}{r_k RT} \cos \theta$$

where:

| | |
|---|---|
| $\gamma$ = | surface tension of sorbate |
| V = | molar volume of sorbate |
| $\theta$ = | contact angle (usually taken for practical reasons to be 0) |
| R = | gas constant |
| T = | absolute temperature |
| $r_k$ = | capillary condensate (pore) radius |
| $P/P_o$ = | relative pressure (taken from the physisorption isotherm) |

The Kelvin equation treats adsorption in pore systems as a capillary condensation phenomenon and relates the pressure at which adsorption takes place to the pore diameter through the surface tension and contact angle of the adsorbate (in this case, argon). The principles upon which the Kelvin equation are based are valid for pores in the size range 50 to 1000 Angstrom diameter. Below this range the equation no longer reflects physical reality, since true capillary condensation cannot occur in smaller pores; above this range the logarithmic nature of the equation precludes obtaining sufficient accuracy for pore size determination.

The particular implementation of the Kelvin equation often chosen for measurement of pore size is that reported by Dollimore and Heal (D. Dollimore and G.R. Heal, J. Applied Chem, 14, 108 (1964)). This method corrects for the effects of the surface layer of adsorbate on the pore wall, of which the Kelvin equation proper does not take account, and thus provides a more accurate measurement of pore diameter. While the method of Dollimore and Heal was derived for use on desorption isotherms, it can be applied equally well to adsorption isotherms by simply inverting the data set.

Transmission Electron Microscopy

In order to illuminate the microstructure of materials by transmission electromicroscopy (TEM), samples must be thin enough for an electron beam to pass through them, generally 500-1000 Å or so thick. The crystal morphology of the present materials usually required that they be prepared for study by ultramicrotomy. While time consuming, this technique of sample preparation is quite familiar to those skilled in the art of electron microscopy. The materials are embedded in a resin, in this case a commercially available low viscosity acrylic resin L.R. WHITE (hard), which is then cured at 80°C for 1 1/2 hours. Thin sections of the block are cut on an ultramicrotome using a diamond knife and sections in the thickness range 500-1000 Å are collected on fine mesh electron microscope support grids. For these materials, an LKB model microtome with a 45°C diamond knife edge was used; the support grids were 400 mesh copper grids. After evaporation of a thin carbon coating on the sample to prevent charging in the microscope (light gray color on a white sheet of paper next to the sample in the evaporator), the samples are ready for examination in the TEM.

High resolution TEM micrographs show projections of structure along the direction that the sample is viewed. For this reason, it is necessary to have a sample in specific orientations to see certain details of the microstructure of the material. For crystalline materials, these orientations are most easily chosen by observing the electron diffraction pattern (EDP) that is produced simultaneously with the electron microscope image. Such EDPs are readily produced on modern TEM instruments using, e.g. the selected area field limiting aperture technique familiar to those skilled in the art of electron microscopy. When an EDP with the desired arrangement of diffraction spots is observed, the corresponding image of the crystal giving that EDP will reveal details of the microstructure along the direction of projection indicated by the EDP. In this way, different projections of a crystal's structure can be observed and identified using TEM.

In order to observe the salient features of the crystalline product, it is necessary to view the material in an orientation wherein the corresponding EDP gives a hexagonal arrangement of diffraction spots from a single individual crystal. If multiple crystals are present within the field limiting aperture, overlapping diffraction patterns will occur that can be quite difficult to interpret. The number of diffraction spots observed depends to a degree upon the regularity of the crystalline arrangement in the material, among other things. At the very least the inner ring of bright spots should be observed to obtain a good image. Individual crystals can be manipulated by specimen tilt adjustments on the TEM until this orientation is achieved. More often, it is easier to take advantage of the fact that the specimen contains many

randomly oriented crystals and to simply search through the sample until a crystal giving the desired EDP (and hence orientation) is located. This latter technique was used to produce the electron micrographs.

Microtomed samples of materials from the Examples were examined by the techniques described above in a JEOL 200 CX transmission electron microscope operated at 200,000 volts with an effective 2 Å objective aperture in place. The instrument has a point-to-point resolution of 4.5 Å. Other experimental arrangements familiar to one skilled in the art of high resolution (phase contrast) TEM could be used to produce equivalent images provided care is taken to keep the objective lens on the underfocus (weak leans) side of the minimum contrast lens current setting.

Example 21

A sample of MCM-41 (40 Å) was prepared in accordance with the method described below.

The following mixture (parts by weight - pbw) was charged to an autoclave:

| | |
|---|---|
| 83.7pbw | Cetyltrimethylammonium (CTMA) hydroxide, prepared by contacting a 29 wt % N,N,N-trimethyl-1-hexadecylammonium chloride solution with a hydroxide-for-halide exchange resin |
| 1.7pbw | Sodium aluminate, |
| 41.1pbw | Tetramethylammonim silicate (10% aqueous solution), |
| 10.5pbw | Precipitated hydrated silica (HiSil ♦). |

The mixture was crystallized at 100°C for 20 hrs. with srirring under autogeneous pressure. The resulting product was recovered by filtration and dried in air at ambient temperature. A sample of the product was calcined at 540° C for 1 hour in nitrogen, followed by 6 hours in air for characterization.

The calcined product had a surface area of 1120 m2/g and the following equilibrium absorption capacities in grams/100 grams:

| | |
|---|---|
| H2O | 10.8 |
| Cyclohexane | >50 |
| n-hexane | >50 |
| Benzene | 67 |

The product was identified as MCM-41 with an X-ray diffraction pattern which included a very strong relative intensity line at 38.4 ± 2.0 Å d-spacing, and weak lines at 22.6 ± 1.0, 20.0 ± 1.0, and 15.2 ± 1.0 Å.

The MCM-41 crystalline product was exchanged with room temperature aqueous solutions of ammonium nitrate and subsequently dried overnight at 121°C (250°F). A portion of the resultant crystals was combined with $Al_2O_3$ to form a mixture of 65 parts, by weight MCM-41 and 35 parts alumina. Water was added to this mixture to allow the resulting catalyst to be formed into extrudates. The catalyst was activated by calcination at 510°C (950°F) in 5v/v/min of nitrogen for 6 hours followed by the replacement of the nitrogen with 5v/v/min of air. The calcination was completed by raising the temperature to 538°C (1000°F) and maintaining that temperature in 5v/v/min air for 18 hours. Nickel and tungsten were incorporated via incipient wetness coimpregnation using solutions of $Ni(NO_3)_2.6H_2O$ and $(NH_4)_6H_2W_{12}O_{40}.H_2O$. After drying overnight at 121°C (250°F), the extrudate was calcined in 5v/v/min air at 538°C (1000°F) for 3 hours. Physical and chemical properties of the NiW/MCM-41/Al2O3 catalyst are provided below:

| | |
|---|---|
| Nickel, wt % | 3.7 |
| Tungsten, wt % | 9.2 |
| Sodium, ppm | 200 |
| Surface Area, $m_2/g$ | 530 |
| Pore Volume, ml/g | 0.780 |
| Particle Density, g/ml | 0.883 |
| Real Density, g/ml | 2.837 |

Example 22

The catalyst of Example 21 was used as the hydrocracking catalyst in a DHC-2/NiW MCM-41 cascade reactor system. DHC-2 is a hydrotreating catalyst sold by UOP. The catalyst fill ratio was 4.08g of DHC-2 and 6.40g of NiW-MCM-41 to give an HDT/HDC weight ratio of 0.64, with a total catalyst volume of 20.2cc. The DHC-2 catalyst serves as a hydrotreating catalyst to reduce nitrogen and sulfur content before the oil is processed in the hydrocracking section of the reactor containing the NiW/MCM-41 catalyst which does the bulk of the boiling range conversion. The feed was a heavy vacuum gas oil from a Persian Gulf crude with the properties are listed in Table 1 below.

Table 1

| Properties of Persian Gulf VGO | |
|---|---|
| Hydrogen, wt % | 12.6 |
| Nitrogen, ppm | 650 |
| Basic Nitrogen, ppm | 198 |
| Sulfur, wt % | 2.3 |
| API Gravity | 22.6 |
| Pour Point, °C (°F) | 32 (90) |
| Composition, wt % | |
| Paraffins | 27.7 |
| Mononaphthenes | 8.3 |
| Polynaphthenes | 14.6 |
| Aromatics | 49.4 |
| Simulated Dist., wt % | |
| IBP, °C (°F) | 277 (531) |
| 5 | 364 (687) |
| 10 | 379 (715) |
| 20 | 396 (745) |
| 30 | 410 (770) |
| 40 | 423 (793) |
| 50 | 436 (816) |
| 60 | 449 (841) |
| 70 | 463 (866) |
| 80 | 481 (897) |
| 90 | 506 (942) |
| 95 | 521 (970) |
| EP | 577 (1071) |

The process conditions were 8377 kPa (1200 psig) hydrogen pressure, 810 v/v (4500 SCFB) hydrogen circulation and 0.5 LHSV. Severity was varied by adjusting reactor temperature from 382°-410°C (720°-770°F) at constant LHSV. The temperatures of the hydrotreating and hydrocracking reactors were maintained at the same temperature for all runs.

The reactor severity is measured by 343°C-(650°F-) boiling range conversion which is defined as:

$$650°\text{F- conversion} = \frac{650°\text{F+ in Feed (wt \%)} - 650°\text{F+ in Product (wt\%)}}{650°\text{F+ in Feed (wt \%)}}$$

The selectivities for kerosene (330-440°F fraction) and distillate (440-650°F fraction) are shown in tabular form for a conversion level of 45 wt %, in Table 2 below:

Table 2

| HDC of VGO BLEND (45 wt% Conversion) | |
|---|---|
| Catalyst | DHC-2/NiW-MCM-41 |
| Reactor Temp., (C°) °F | 401 (753) |
| Product Composition, wt % | |
| C1-C4 | 4.0 |
| C5-330 | 10.5 |
| 330-440 | 9.0 |
| 440-650 | 22.5 |
| 650-750 | 18 |
| 750+ | 35 |
| H2 Cons, SCFB | 850 |

The Total Liquid Product (TLP) samples at the 43 wt% conversion were distilled to yield 388°C+ (730°F+) bottoms material that was subsequently analyzed, with the results given in Table 3.

Table 3

| Bottoms Properties at 43 wt % 650°F+ Conversion 388°C+ (730°F+) Properties | |
|---|---|
| Nitrogen, ppm | 3 |
| Mol. Weight | 388 |
| Pour Point, °C (°F) | 32 (90) |
| KV @ 100°C, $mm^2/s$ | 4.804 |
| Composition, wt % | |
| Paraffins | 43.3 |
| Mononaphthenes | 19.3 |
| Polynaphthenes | 23.4 |
| Aromatics | 14.0 |
| Simulated Dist., wt % | |
| IBP/5 °C (°F) | 372/388 (701/731) |
| 10/50 | 396/436 (745/817) |

The MCM-41 catalyst was highly effective in reducing the nitrogen level of the bottoms to a very low level of 3 ppm. Also, the degree of aromatic saturation for the MCM-41 catalyst was good: aromatics level dropped from 19.6 to 14.0 wt %.

Example 23

The following mixture (parts by weight) was charged to an autoclave:

| | |
|---|---|
| 48 parts | Cetyltrimethylammonium (CTMA) hydroxide solution, prepared by contacting a 29 wt % N,N,N-trimethyl-1-hexadecyl-ammonium chloride solution with a hydroxide-for-halide exchange resin, |
| 1 part | Sodium aluminate, |
| 24 parts | Tetramethylammonim silicate (10% aqueous solution), |
| 6 parts | Precipitated hydrated silica (HiSil♦). |

The mixture was crystallized at 100°C for 20 hrs. with stirring under autogeneous pressure, and the resulting product was recovered by filtration and dried in air at ambient temperature. A sample of the product was calcined at 540°C in nitrogen followed air.

The calcined product had a surface area of 1120 $m^2/g$ and the following equilibrium absorption capacities in grams/100 grams:

| | |
|---|---|
| H2O | 10.8 |
| Cyclohexane | >50 |
| n-hexane | >50 |
| Benzene | 67 |

The product exhibited a very strong relative intensity line at 38.4 ± 2.0 Å d-spacing, and weak lines at 22.6 ± 1.0, 20.0 ± 1.0, and 15.2 ± 1.0 Å.

An unbound Pt/H-MCM-41 catalyst containing 0.6 wt % platinum was prepared by subjecting the calcined product to ammonium exchange in buffered solution at pH=8 to remove sodium, followed by exchange with $Pt(NH_3)_4Cl_2$ in the presence of ammonium ions at pH 4-5, followed by drying and calcination. An amorphous silica-alumina catalyst containing 0.6 wt % platinum, comparable to commercial isomerization catalysts, was also prepared for comparison.

The catalyst was evaluated for paraffin isomerization using a micro unit equipped with a 12.5 mm downflow stainless steel reactor. A commercial $Pt/SiO_2$-$Al_2O_3$ catalyst was used for comparison. In a typical experiment, 10 cc of sized catalyst (14/24 mesh) were loaded into the reactor and reduced in hydrogen at 800°F (427°C) for two hours. The reactor was cooled to 450°F (232°C) and pressurized to 100 psig (790 kpa abs.) with hydrogen. N-hexane as feed was then introduced at 1 WHSV with a 2:1 mol:mol hydrogen cofeed. The product from the reactor was analyzed with an on-line gas chromatograph equipped with a 30 meter megabore DB-1 column.

The Pt/MCM-41 catalyst gave a higher yield of isoparaffins than the Pt/silica-alumina catalyst at equivalent n-hexane conversion and produced less cracked product at equivalent n-hexane conversion, demonstrating that the catalyst based on the ultra large pore material is more selective for isoparaffin when compared to the amorphous catalyst. The distribution of products for the two catalysts at 343°C (650°F) operating temperature are shown in Table 4 below.

Table 4

| Isomerate Products at 343°C (650°F) | | |
|---|---|---|
| Catalyst | Pt/MCM-41 | $Pt/Si0_2$-$Al_20_3$ |
| Feed Rate (gm n-$C_6$/gm Cat/hr) | 1.0 | 1.0 |
| Hours On-Stream | 129 | 64 |
| Conversion, wt % | 74.6 | 78.6 |
| Product Distribution, wt % | | |
| $C_5$- | 2.3 | 8.8 |
| n-Hexane | 25.4 | 21.4 |
| Methylpentanes | 53.7 | 49.9 |
| Dimethylbutanes | 18.2 | 18.5 |
| Methylcyclopentane | 0.2 | 0.5 |
| $C_7$+ | 0.2 | 0.9 |

Example 24

Pt/MCM-41 Catalyst Preparation

A sample of MCM-41 (40 Å) was prepared in accordance with the method described in Example 21 above.

The MCM-41 crystalline product was exchanged with room temperature aqueous solutions of ammonium nitrate and subsequently dried overnight at 121°C (250°F). A portion of the resultant crystals was combined with $Al_2O_3$ (Versal 250 ♦) to form a mixture of 65 parts, by weight MCM-41 and 35 parts alumina. Water was added to this mixture to allow the resulting catalyst to be formed into extrudates. The catalyst was activated by calcination at 510°C (950°F) in 5v/v/min of nitrogen for 6 hours followed by the replacement of the nitrogen with 5v/v/min of air. The calcination was completed by raising the temperature to 538°C (1000°F) and maintaining that temperature in 5v/v/min air for 18 hours.

The calcined extrudate was exchanged with a 0.0062M $Pt(NH_3)_4Cl_2$ solution, followed by washing, drying and calcination in air at 343°C (650°F) for three hours.

Pd/MCM-41 Catalyst Preparation

A sample of MCM-41 (40 Å) was prepared by a similar method to that described in Example 21 above but using 48 pbw cetyltrimethylammonium (CTMA) hydroxide, 1 pbw sodium aluminate, 24 pbw tetramethylammonim silicate (10% aqueous solution), and 6 pbw precipitated hydrated silica (HiSil ♦). The mixture was crystallized at 100°C for 20 hrs.

The MCM-41 crystalline product was formulated into a catalyst in the same way as the platinum-containing catalyst with the exception that the calcined catalyst was exchanged with aqueous $Pd(NH_3)_4Cl_2$ solution, followed by drying at room temperature for 4 hours and overnight at 250°F before the final calcination.

A $Pd/SiO_2$ catalyst was made by impregnating silica spheres (Shell S-980 C 1.5) with a $Pd(NH_3)_4Cl_2$ solution using the incipient wetness method. The impregnated spheres were then dried at room temperature for 4 hours, followed by 121°C (250°F) overnight after which the catalyst was calcined in 5 v/v/min air at 288°C (550°F) for 3 hours.

The three noble metal containing catalysts (Pt MCM-41/$Al_2O_3$, Pd MCM-41/$Al_2O_3$, Pd $SiO_2$) were evaluated for hydrogenating a polyalpha-olefin lubricant.

The properties of the three catalysts are summarized in Table 5 below.

Table 5

| Catalyst Properties | | | |
|---|---|---|---|
| | Pd MCM-41[(1)] | Pt MCM-41[(1)] | Pd SiO2 |
| Metal Loading, Wt % | | | |
| Pd | 0.83 | - | 0.84 |
| Pt | - | 0.54 | - |
| Surface Area, $m^2/g$ | 800 | 682 | 330 |
| Pore Volume, cc/g | 0.96 | 0.97 | 0.88 |
| Pore Distribution,% | | | |
| <50 Å | 32 | 42 | 0 |
| 50-100 Å | 16 | 12 | 41 |
| 100-200 Å | 15 | 11 | 32 |
| >200 Å | 37 | 35 | 37 |

(1) Contains 65 wt % MCM-41 and 35 wt % alumina prior to the metal addition.

The MCM-41 materials used in the catalysts containg this crystalline material had a pore opening of 40 Å. All three catalysts have 30% pore volume with pore diameters greater than 200 Å but the MCM-41 catalysts have 30-40% pore volume with pore diameters less than 50 Å.

All catalysts were evaluated in a fixed-bed pilot unit. A poly-alpha olefin (PAO) lube oligomer having the composition shown in Table 6 below was used as the feed.

Table 6

| Properties of PAO | |
|---|---|
| Gravity, °API | 39.2 |
| Hydrogen, wt % | 14.6 |
| Bromine Number | 27.3 |
| KV @ 40°C, $mm^2/s$ | 26.22 |
| KV @100°C, $mm^2/s$ | 5.253 |
| Viscosity Index | 136 |

The PAO was hydrogenated at 2.0 LHSV, 2520 kPa (350 psig) $H_2$ and 900 v/v (5000 scf/b) of once-through hydrogen circulation rate. Reactor temperature was varied to obtain catalyst activity as a function of temperature. Catalyst activity is measured by the reduction of bromine number of the oil.

The Pd MCM-41/$Al_2O_3$ catalyst is the most active catalyst. It achieved the reduction of bromine number to less than 1 at 177°C (350°F), the lowest temperature of the experiments. Pt MCM-41/$Al_2O_3$ is also quite active. The Pd/$SiO_2$ catalyst, is the least active catalyst for this reaction.

<u>Example 25</u>

This example shows the use of an MCM-41 molecular sieve for selective lube hydrocracking. A NiW/MCM-41 catalyst was prepared in accordance with the method of Example 21 above.

This catalyst was used to hydrocrack a heavy neutral distillate having the properties given in Table 7 below, together with the properties of the oil after solvent dewaxing to 0°F pour point (ASTM D-97 or equivalent such as Autopour). The feedstock has high nitrogen content of 1500 ppm and that the distillate VI after solvent dewaxing is 53. The objective of lube hydrocracking the distillate is to increase the VI level to the 95-100 VI range after solvent dewaxing while maximizing lube yield.

Table 7

| Heavy Neutral Distillate Properties | |
|---|---|
| Hydrogen, wt % | 12.83 |
| Nitrogen, ppm | 1500 |
| Basic Nitrogen, ppm | 466 |
| Sulfur, wt % | 0.72 |
| API Gravity | 22.0 |
| KV @ 100°C, $mm^2/s$ | 18.52 |
| Composition, wt % | |
| Paraffins | 18.3 |
| Naphthenes | 32.2 |
| Aromatics | 49.5 |
| Sim Dist, wt% | |
| IBP °C (°F) | 407 (765) |
| 5 | 452 (846) |
| 10 | 471 (880) |
| 95 | 586 (1086) |
| Solvent Dewaxed Oil Properties | |
| KV @ 100°C, $mm^2/s$ | 20.1 |
| VI | 53 |
| Pour Point, °C (°F) | -18 (0) |
| Lube Yield, wt % | 87 |

The distillate was processed at temperatures from 385° to 401°C (725° to 754°F), 13900 kPa (2000 psig) hydrogen pressure, 1350 v/v (7500 SCFB) hydrogen circulation and 0.55 to 0.61 LHSV. The data from these experimental runs are summarized in Table 8 below:

Table 8

| (LHDC with NiW/MCM-41) | | | |
|---|---|---|---|
| Temp., °C (°F) | 385 (725) | 393 (739) | 401 (754) |
| Pressure, kPa (psig) | 13900 (2000) | 13900 (2000) | 13900 (2000) |
| LHSV | 0.61 | 0.54 | 0.55 |
| 650°F+ conv., wt % | 9.3 | 20.8 | 36.0 |
| Lube Properties | | | |
| KV @ 100°C, $mm^2/s$ | 13.08 | 10.46 | 7.59 |
| SUS @ 38°C (100°F) | 772 | 468 | 261 |
| VI | 79 | 98.1 | 113.3 |
| Pour Point, °C (°F) | -9.4 (15) | -1.1 (30) | -1.1 (30) |
| Lube Yield, wt % | 80.5 | 66.6 | 54.3 |

The NiW/MCM-41 catalyst was selective for upgrading the heavy neutral distillate from a raw distillate VI of 53 to a 98 VI product at a conversion level of 20.8 wt%.

Example 26

48 parts by weight of cetyltrimethylammonium (CTMA) hydroxide solution, prepared by contacting a 29 wt % N,N,N-trimethyl-1-hexadecylammonium chloride solution with a hydroxide-for-halide exchange resin, was combined with 1 part by weight of sodium aluminate and 24 parts by weight of an aqueous solution of tetramethylammonium (TMA) silicate (10% silica) with stirring. 6 parts by weight of HiSil♦, a precipitated hydrated silica containing about 6 wt % free water and about 4.5 wt % bound water of hydration and having an ultimate particle size of about 0.02 micron, was added. The resulting mixture was crystallized at 100°C for 20 hours. The mixture had a composition in terms of moles per mole $Al_2O_3$:

1.46 moles $Na_2O$
27.8 moles $SiO_2$
5.6 moles $(CTMA)_2O$
3.11 moles $(TMA)_2O$ 723.7 moles $H_2O$

The resulting solid product was recovered by filtration and dried in air at ambient temperature. The product was then calcined at 540°C for 1 hour in nitrogen, followed by 6 hours in air.
The calcined product proved to have a surface area of 1200 $m^2/g$ and the following equilibrium adsorption capacities in grams/100 grams:

| | |
|---|---|
| $H_2O$ | 13.5 |
| Cyclohexane | > 50 |
| n-Hexane | 43.6 |
| Benzene | 71 |

The product of this Example has an X-ray diffraction pattern including a very strong relative intensity line at 38.4 ± 2.0 Angstroms d-spacing, and weak lines at 22.6 ± 1.0, 20.0 ± 1.0 and 15.2 ± 1.0 Angstroms.
The product (35 parts by weight) was bound with 65 parts by weight of an alumina binder by a mulling and pelletizing procedure. The pelletized mixture was then calcined, first in nitrogen and then in air, at temperatures up to 538°C (1000°F) to remove organic material included in the as-synthesized material.
Cations in the calcined pellets were then exchanged with ammonium cations by contacting the pellets with solutions of 1N $NH_4NO_3$ maintained at a pH of 8. The twice-exchanged pellets were then dried in air at 121°C (250°F) followed by calcination at 538°C (1000°F) under conditions sufficient to decompose ammonium ions and evolve ammonia, thereby converting the bound material to the hydrogen form.
The hydrogen form of the bound material was then impregnated with an ammonium heptamolybdate solution. More particularly, 45.12 ml of an aqueous solution containing 5.08 grams of ammonium heptamolybdate (81.5 wt % $MoO_3$) was added to 40 grams of the hydrogen form of the bound material. The resulting wet material was dried at 250°F (121°C) and then calcined in air at 1000°F (538°C) under conditions sufficient to decompose ammonium heptamolybdate and generate $MoO_3$, thereby producing a molybdenum impregnated material.
The molybdenum impregnated bound material was then impregnated with a nickel nitrate solution. More particularly, 48.14 ml of an aqueous solution containing 9.12 grams of $Ni(NO_3)_2.6H_2O$ (21.2 wt % Ni) was added to the molybdenum impregnated material. The resulting wet material was dried at 250°F (121°C) and then calcined in air at 1000°F (538°C) to decompose nickel nitrate and generate NiO, thereby producing a nickel and molybdenum impregnated material.
The resulting catalyst had the properties shown in Table 9.

Table 9

| NiMo/MCM-41 Catalyst Properties | |
|---|---|
| Nickel | 4.9 |
| Molybdenum | 8.0 |
| Real Density, g/cc | 2.784 |
| Surface Area, $m^2/g$ | 306 |

(1) 65 wt % MCM-41 and 35 wt % alumina prior to the metals addition.

Example 27

The catalyst of Example 26 was tested for upgrading an Arabian Light Atmospheric Resid having the properties set out in Table 10 below.

Table 10

| Arabian Light Atmospheric Resid General Properties | |
|---|---|
| Gravity, API° | 18.2 |
| Hydrogen, wt % | 11.71 |
| Sulfur, wt % | 3.0 |
| Nitrogen, ppmw | 0.15 |
| CCR, wt % | 7.7 |
| Asphaltenes, wt % | 5.7 |
| Trace Metals, ppmw | |
| Nickel | 8.9 |
| Vanadium | 34.0 |
| Iron | 2.7 |
| Distillation, °C (°F) | |
| IBP | 231 (447) |
| 10% | 344 (651) |
| 30% | 434 (814) |
| 50% | 518 (965) |
| 60% | 569 (1056) |

The oil was processed at 7000 kPa (1000 psig) and a weight hourly space velocity (WHSV) of 0.66. Reactor temperature was varied from 600°F (315°C) to 750°F (399°C) to cover a wide range of conversion. The results of this test are given in Table 11. These results indicate that the catalyst is active for demetallation and asphaltene removal while requiring low hydrogen consumption (as determined by the low hydrogen content of the products).

Table 11

| Product Properties (ATM Resid, 1900 psig, 0.66 WHSV) | | | |
|---|---|---|---|
| Temperature | Metals | Asphaltenes | Hydrogen |
| °C (°F) | Ni+V, ppmw | Wt % | Wt % |
| 316 (600) | 21.8 | 2.61 | 12.04 |
| 343 (650) | 13.2 | 0.9 | 12.43 |
| 371 (700) | 3.8 | 0.29 | 12.54 |
| 385 (725) | 1.2 | - | 12.66 |
| 399 (750) | 0.2 | - | 12.77 |

Example 28

Cations in the as-synthesized material of Example 27 were exchanged with ammonium cations by contacting the material with a solution of 1M $NH_4NO_3$ at room temperature for one hour. The exchanged material was filtered and rinsed with water. This exchange/filter/rinse procedure was repeated and the material was then dried at 250°F (121°C) overnight to form an ammonium exchanged material.

35 parts by weight of this ammonium exchanged material was bound with 65 parts by weight of an alumina binder by an extrusion procedure, producing extrudate in the form of 1/16-inch cylinders. The extruded, bound material was dried overnight at 250°F (121°C). The dried material was then calcined, first in nitrogen and then in air, at temperatures up to 1000°F (538°C) under conditions sufficient to decompose ammonium ions and to substantially remove organic material, thereby converting the material to the hydrogen form.

The hydrogen form of the bound material was humidified with moist air by placing the material in the path of a stream of air which had been passed through a bubbler at room temperature. The moisture saturated material was then impregnated with a solution containing ammonium heptamolybdate and nickel nitrate: 214.8 ml of an aqueous solution containing 25.8 grams of ammonium heptamolybdate (54.3 wt % Mo, 81.5 wt % $MoO_3$) and 27.7 grams of $Ni(NO_3)_2$®$6H_2O$ (20.2 wt % Ni) was added to 182 grams of the moisture saturated bound material. The resulting wet material was dried at 250°F (121°C) and then calcined in air at 1000°F (538°C) under conditions sufficient to decompose ammonium heptamolybdate and nickel nitrate, generating $MoO_3$ and NiO, to produce a molybdenum/nickel impregnated catalyst.

The resulting catalyst had the properties shown in Table 12.

Table 12

| Catalyst Properties<br>Chemical Composition | |
|---|---|
| Ni0, wt % | 3.3 |
| $Mo0_3$, wt % | 7.6 |
| Physical Properties | |
| Surface Area (BET), $m^2/g$ | 645 |
| Pore Volume, cc/g | 0.88 |
| Avg Pore Dia., Angstroms | 55 |
| PSD (Hg Porosimetry), cc/g | |
| <30A | 0.26 |
| 30-100A | 0.19 |
| 100-200A | 0.14 |
| >200A | 0.29 |

This catalyst was evaluated for upgrading Paraho shale oil at relatively mild conditions (2.0 LHSV and 7000 kPa (1000 psig) $H_2$)). Analyses of the retorted Paraho shale oil are given in Table 13. Experimental data are summarized in Table 14.

Table 13

| Retorted Paraho Shale Oil | |
|---|---|
| Gravity, °API | 21.7 |
| Hydrogen, wt % | 11.49 |
| Nitrogen, wt % | 2.20 |
| Sulfur, wt % | 0.69 |
| Arsenic, ppmw | 37 |
| Iron, ppmw | 27 |
| Nickel, ppmw | 2.4 |
| Bromine Number | 45 |
| Molecular Weight | 307 |
| C=C bonds per molecule | 0.85 |
| Distillation, °C (°F) | D 2887 |
| 5% | 239 (463) |
| 30% | 373 (703) |
| 50% | 432 (809) |
| 70% | 491 (915) |
| 95% | - |

The results of this evaluation showed that the catalyst was active for olefin saturation, removal of iron and nickel, and denitrogenation. The catalyst is also active for arsenic removal and desulfurization. The catalyst can dearsenate the shale oil to less than 1.0 ppmw at 700°F (371°C).

Table 14

| Hydroprocessing Of Shale Oil (2.0 LHSV/7000 kPa (1000 psig) $H_2$) | | | | | | |
|---|---|---|---|---|---|---|
| | Bromine No. | Iron (ppmw) | Nickel (ppmw) | Arsenic (ppmw) | Sulfur (wt %) | Nitrogen (ppmw) |
| Temp., C° (°F) | | | | | | |
| 260(500) | 0.9 | 4.3 | 2.4 | 7.5 | 0.66 | 2.18 |
| 288(550) | <0.1 | 3.1 | 1.9 | 5.0 | 0.60 | 1.98 |
| 316(600) | <0.1 | 2.2 | 1.8 | 2.5 | 0.54 | 1.94 |
| 371(700) | <0.1 | 0.3 | 1.6 | <1.0 | 0.32 | 1.59 |
| 381(717) | nm | nm | nm | nm | nm | nm |
| 399(750) | <0.1 | 0.1 | 0.2 | <1.0 | 0.15 | 1.41 |

nm = not measured

Example 29

This Example provides a comparison with a zeolite catalyst (NiW/USY), using a heavy neutral distillate whose

properties are given in Table 15 below, together with the properties of the oil after solvent dewaxing to -18°C (0°F) pour point. It can be seen that the feedstock has high nitrogen content of 1500 ppm and that the distillate VI after solvent dewaxing is 53. The objective of lube hydrocracking the distillate is to increase the VI level to the 95-100 VI range after solvent dewaxing while maximizing lube yield.

Table 15

| Heavy Neutral Distillate Properties | |
|---|---|
| Hydrogen, wt % | 12.83 |
| Nitrogen, ppm | 1500 |
| Basic Nitrogen, ppm | 466 |
| Sulfur, wt % | 0.72 |
| API Gravity | 22.0 |
| KV @ 100°C, $mm^2/s$ | 18.52 |
| Composition, wt % | |
| Paraffins | 18.3 |
| Naphthenes | 32.2 |
| Aromatics | 49.5 |
| Sim Dist, wt % | |
| IBP, °C (°F) | 407 (765) |
| 5 | 452 (846) |
| 10 | 471 (880) |
| 95 | 585 (1086) |
| Solvent Dewaxed Oil Properties | |
| KV @ 100°C, $mm^2/s$ | 20.1 |
| VI | 53 |
| Pour Point, °C (°F) | 18 (0) |
| Lube Yield, wt % | 87 |

The heavy neutral distillate feed was processed over a fixed bed reactor containing a NiW/USY hydrocracking catalyst made by the following procedure: a commercial USY (PQ Corp. Z-14 USY) was combined with $Al_2O_3$ to form a mixture of 65 parts, by weight, zeolite and 35 parts alumina. Water was added to this mixture to allow the resulting catalyst to be formed into extrudates. The catalyst was then thermally treated at 538°C (1000°F) in flowing air for three hours. A portion of the resultant extrudate was exchanged with aqueous solutions of ammonium nitrate and was subsequently dried overnight at 121°C (250°F). Following a three hour 538°C (1000°F) air calcination, 100% steam was introduced and the temperature maintained at 538°C (1000°F) for 10 hours. Nickel and tungsten were incorporated via incipient wetness coimpregnation using solutions of $Ni(NO_3)2.6H_2O$ and $(NH_4)_6H_2W_{12O}40.H_2O$. After drying, the extrudates were calcined for three hours in flowing air at 538°C (1000°F). The Ni and W loadings on the final catalyst were 5.8 and 16.6 wt %, respectively.

The processing conditions were 10450-18720 kPa (1500-2700 psig) hydrogen pressure, 1350 v/v (7500 SCFB) hydrogen circulation and 0.5 to 1.0 LHSV. The total liquid product of the reactor was distilled to a nominal 343°C+ (650°F+) cut-point and the feed was subsequently dewaxed with a 60/40 mixture of MEK/toluene. The results of these experiments are summarized in Table 16 below.

Table 16

| (LHDC with NiW/USY) | | | |
|---|---|---|---|
| Temp., °C(°F) | 371(700) | 385(725) | 399(750) |
| Pressure, kPa(psig) | 18720(2700) | 18720(2700) | 10460(1500) |
| LHSV | 0.5 | 0.5 | 1.0 |
| 650°F+ conv., wt % | 15.2 | 29.3 | 20.0 |
| Lube Properties | | | |
| KV @ 100°C,$mm^2/s$ | 14.7 | 10.95 | 10.68 |
| SUS @ 100°F | 982 | 519 | 515 |
| VI | 72 | 94 | 90 |
| Pour Point, °C (°F) | -15 (5) | -15 (5) | -15 (5) |
| Lube Yield, wt % | 80.9 | 60.1 | 63.5 |

Example 30

This example illustrates the use of a commercially available amorphous catalyst (NiW/Al2O3) without any promoter. Conditions for this example were 13900 kPa (2000 psig) hydrogen pressure, 1350 v/v (7500 SCFB) hydrogen circulation, and 0.5 LHSV. Table 17 below summarizes results of this experimental run.

Table 17

| (LHDC With Unfluorided NiW/alumina) | | | |
|---|---|---|---|
| Temp., °C(°F) | 399(750) | 407(765) | 413(775) |
| Pressure, kPa (psig) | 13900 (2000) | 13900 (2000) | 13900 (2000) |
| LHSV | 0.5 | 0.5 | 0.5 |
| 650°F+ conv., wt % | 15.5 | 21.5 | 28.2 |
| Lube Properties | | | |
| KV @ 100°C, $mm^2/s$ | 11.44 | 9.83 | 8.86 |
| SUS @ 100°F | 602 | 449 | 369 |
| VI | 83.9 | 91.7 | 97.0 |
| Pour Point, °C (°F) | -21 (-5) | -21 (-5) | -23 (-10) |
| Lube Yield, wt % | 70.2 | 64.3 | 58.6 |

Example 31

This example utilizes the same catalyst as Example 30 except that the catalyst is activated by in-situ fluoriding in the fixed bed reactor to achieve a target 2-5 wt % fluorine on catalyst. This was accomplished by fluoriding the catalyst with a high level (600 ppm) of fluorine in the distillate for a one week period after which the flourine level is reduced to a 25 ppm level at which it is held for the remainder of the experimental run. Ortho-fluorotoluene was used as the fluoriding agent. Processing conditions were 13900 kPa (2000 psig) hydrogen, 1350 v/v (7500 SCFB) hydrogen circulation and 0.5 to 1.0 LHSV. The data from these experimental runs are given in Table 18 below.

Table 18

| (LHDC With Fluorided NiW/alumina) | | | |
|---|---|---|---|
| Temp., °C (°F) | 407 (764) | 399 (751) | 413 (775) |
| Pressure, kPa (psig) | 13900 (2000) | 13900 (2000) | 13900 (2000) |
| LHSV | 1.0 | 0.5 | 1.0 |
| 650°F+ conv., wt % | 16.3 | 18.9 | 21.7 |
| Lube Properties | | | |
| KV @ 100°C, $mm^2/s$ | 10.22 | 9.25 | 9.12 |
| SUS @ 100°F | 468 | 392 | 380 |
| VI | 93.8 | 97.5 | 98.8 |
| Pour Point, °C (°F) | -1 (30) | -7 (20) | -7 (20) |
| Lube Yield, wt % | 74.4 | 70.0 | 68.5 |

Example 32

This example shows the benefits of using an M41S molecular sieve for selective lube hydrocracking. A NiW/MCM-41 catalyst was prepared as outlined below.

A sample of MCM-41 (40 Å) was prepared in accordance with the following method.

The following mixture (parts by weight) was charged to an autoclave:

| | |
|---|---|
| 83.7pbw | Cetyltrimethylammonium (CTMA) hydroxide, prepared by contacting a 29 wt % N,N,N-trimethyl-hexadecylammonium chloride solution with a hydroxide-for-halide exchange resin, |
| 1.7pbw | Sodium aluminate, |
| 4.1pbw | Tetramethylammonim silicate (10% aqueous solution, 10.5pbw Precipitated hydrated silica (Hisil ♦). |

The mixture was crystallized at 100°C for 20 hours with stirring under autogeneous pressure. The resulting product was recovered by filtration and dried in air at ambient temperature. A sample of the product was calcined at 540°C for 1 hour in nitrogen, followed by 6 hours in air for characterization.

The calcined product had a surface area of 1120 $m^2/g$ and the following equilibrium absorption capacities in grams/100 grams:

| | |
|---|---|
| $H_2O$ | 10.8 |
| Cyclohexane | >50 |
| n-hexane | >50 |
| Benzene | 67 |

The calcined product exhibited very strong relative intensity line at 38.4 + 2.0 Å d-spacing, and weak lines at 22.6 ± 1.0, 20.0 ± 1.0, and 15.2 ± 1.0 Å.

The MCM-41 product was exchanged with room temperature aqueous solutions of ammonium nitrate and subsequently dried overnight at 121°C (250°F). A portion of the resultant crystals was combined with $Al_2O_3$ to form a mixture of 65 parts, by weight MCM-41 and 35 parts alumina. Water was added to this mixture to allow the resulting catalyst to be formed into extrudates. The catalyst was activated by calcination at 510°C (950°F) in 5v/v/min of nitrogen for 6 hours followed by the replacement of the nitrogen with 5v/v/min of air. The calcination was completed by raising the temperature to 538°C (1000°F) and maintaining that temperature in 5v/v/min air for 18 hours. Nickel and tungsten were incorporated via incipient wetness coimpregnation using solutions of $Ni(NO_3)_2.6H_2O$ and $(NH_4)_6H_2W_{12O}40.H_2O$. After drying overnight at 121°C (250°F), the extrudate was calcined in 5v/v/min air at 538°C (1000°F) for 3 hours. Physical and chemical properties of the NiW/MCM-41/$Al_2O_3$ catalyst are:

| | |
|---|---|
| Nickel, wt % | 3.7 |
| Tungsten, wt % | 9.2 |
| Sodium, ppm | 200 |
| Surface Area, $m^2$/ | 530 |
| Pore Volume, ml/g | 0.780 |
| Particle Density, g/ml | 0.883 |
| Real Density, g/ml | 2.837 |

This catalyst was used to hydrocrack the distillate at temperatures from 385° to 401°C (725° to 754°F), 13900 (2000 psig) hydrogen pressure, 1350 (7500 SCFB) hydrogen circulation and 0.55 to 0.61 LHSV. The data from these experimental runs are summarized in Table 19 below:

Table 19

| (LHDC with NiW/MCM-41) | | | |
|---|---|---|---|
| Temp., °C (°F) | 385 (725) | 393 (739) | 401 (754) |
| Pressure, kPa (psig) | 13900 (2000) | 13900 (2000) | 13900 (2000) |
| LHSV | 0.61 | 0.54 | 0.55 |
| 650°F+ conv., wt % | 9.3 | 20.8 | 36.0 |
| Lube Properties | | | |
| KV @ 100°C, $mm^2/s$ | 13.08 | 10.46 | 7.59 |
| SUS @ 100°F | 772 | 468 | 261 |
| VI | 79 | 98.1 | 113.3 |
| Pour Point, °C (°F) | -9.4 (15) | -1.1 (30) | -1.1 (30) |
| Lube Yield, wt % | 80.5 | 66.6 | 54.3 |

The NiW/MCM-41 catalyst was selective for upgrading the heavy neutral distillate from a raw distillate VI of 53 to a 98 VI product at a conversion level of 20.8 wt %. The lube yield versus VI selectivity data for Examples 29 to 32 is represented in Figure 1. It can be seen that the unfluorided NiW/MCM-41 catalyst produces a higher VI product at a given lube yield or alternatively a higher lube yield at a given VI compared to the other unfluorided catalysts evaluated, i.e. NiW/USY or NiW/alumina. In the VI range of commercial significance (95-100 VI), the fluorided NiW/alumina catalyst has a slightly higher lube yield vs VI selectivity compared to the NiW/MCM-41 catalyst but has the draw-back of requiring fluorine. Additionally, the activity of the NiW/MCM-41 catalyst as determined by the temperature requirement to achieve target conversion was very favorable compared to both the fluorided and unfluorided NiW/alumina catalysts. This is shown in Table 20 below where a nominal 20 wt % 343°C+ (650°F+) conversion severity was achieved.

Table 20

| Catalyst activity | | | |
|---|---|---|---|
| | NiW/MCM-41 | Unfluorided NiW/alumina | Fluorided NiW/alumina |
| Temp., °C (°F) | 393 (739) | 407 (765) | 400 (751) |
| 650°F+ conv. wt % | 20.8 | 21.5 | 18.9 |
| Pressure, kPa (psig) | 13900 (2000) | 13900 (2000) | 13900 (2000) |

Table 20 (continued)

| Catalyst activity | | | |
|---|---|---|---|
| | NiW/MCM-41 | Unfluorided NiW/alumina | Fluorided NiW/alumina |
| LHSV | 0.54 | 0.5 | 0.5 |

The NiW/MCM-41 catalyst was more active than both the fluorided and unfluorided NiW/alumina catalysts. Since lube hydrocracker catalysts typically age with time on-stream, the increased activity of the MCM-41 catalyst system is beneficial in terms of the potential for improvements in commercial cycle length.

Example 33

This example provides a comparison with an amorphous catalyst in the hydroprocessing of a heavy neutral slack wax. The feed was a heavy neutral (HN) slack wax whose properties are listed in Table 21 below.

Table 21

| Properties of Heavy Neutral Slack Wax | |
|---|---|
| Hydrogen, wt % | 14.56 |
| Nitrogen, ppm | 54 |
| Sulfur, wt % | 0.102 |
| API Gravity | 34.9 |
| KV @ 100°C, $mm^2/s$ | 7.117 |
| Solvent Extractables, wt % (D3235) | 34.05 |
| Simulated Distillation, °C (°F) | |
| IBP/5 | 391/430 (736/805) |
| 10/20 | 442/459 (828/858) |
| 30/40 | 470/481 (879/898) |
| 50/60 | 491/502 (916/936) |
| 70/80 | 514/528 (957/982) |
| 90/EP | 545/590 (1014/1095) |
| Dewaxed Oil Properties | |
| Nitrogen, ppm | 95 |
| Sulfur, wt % | 0.220 |
| Pour point, °C (°F) | -17.8 (0) |
| KV @ 40°C, $mm^2/s$ | 92.04 |
| KV @ 100°C, $mm^2/s$ | 10.53 |
| VI | 96.2 |
| Composition, wt % | |
| Paraffins | 23.2 |
| Mononaphthenes | 19.4 |
| Polynaphthenes | 37.1 |
| Aromatics | 20.3 |

The feed was processed over a fixed bed reactor containing NiW/alumina fluorided catalyst that was sulfided and then fluorided in-situ by adding 600 ppm of fluorine as ortho-fluorotoluene in the slack wax feed for approximately one week to target a fluorine level of 2-5 wt % on catalyst. The operating conditions for the run were 13900 (2000 psig) hydrogen pressure 1 LHSV and the reactor temperature was varied from 374° to 402°C (705° to 755°F) to cover a wide conversion range. The total liquid product from the hydrocracking step was then distilled to a nominal 343°C+ (650°F+) cut-point. The waxy bottoms was then solvent dewaxed to a target -17.8°C (0°F) pour point. The results of these runs are summarized in Table 22 below.

Table 22

Wax Hydrocracking - NiW/$Al_2O_3$ Catalyst

| | | | | | | | |
|---|---|---|---|---|---|---|---|
| Mass Bal. No. | 411 | 412 | 413 | 415 | 416 | 417 | 418 |
| Reactor temp, °C (°F) | 393 (740) | 398 (750) | 402 (755) | 391 (735) | 385 (725) | 380 (715) | 374 (705) |
| 650°F- Conv, wt % | 28 | 40 | 48 | 23 | 17 | 10 | 9 |
| Lube Properties | | | | | | | |
| KV @ 100°C | 5.0 | 4.3 | 4.0 | 5.1 | 5.4 | 5.9 | 6.7 |
| VI | 137 | 143 | 140 | 146 | 141 | 137 | 131 |
| Pour Point, °C (°F) | -15 (5) | -17.8 (0) | -20.5 (-5) | -17.8 (0) | -20.5 (-5) | -15 (5) | -9.4 (15) |
| VI @ 0°F Pour | 136 | 143 | 141 | 146 | 142 | 136 | 128 |
| Lube Yield, wt % | 40 | 43 | 42 | 40 | 34 | 33 | 29 |
| Wax Conversion | 50 | 74 | 84 | 42 | 24 | 12 | 4 |

Boiling point conversion is defined as:

$$650°F\text{- conversion} = \frac{650°F\text{+ in Feed} - 650°F\text{+ in Product}}{650°F\text{+ in Feed}}$$

Wax Conversion is defined as:

$$\text{Wax Conversion} = \frac{\text{Wt \% Wax in Feed} - \text{(Wt \% Unconverted Wax after Solvent Dewaxing)}}{\text{Wt \% Wax in Feed}}$$

Example 34

This example illustrates the use of the ultra-large pore size catalysts.

A NiW/MCM-41 catalyst was prepared as described below.

A sample of MCM-41 (40 Å) was prepared by crystallizing the following mixture in an autoclave:

| | |
|---|---|
| 60.7pbw | Cetyltrimethylammonium (CTMA) hydroxide, prepared by contacting a 29 wt % N,N,N-trimethyl-1-hexadecylammonium chloride solution with a hydroxide-forhalide exchange resin, |
| 1.3pbw | Sodium aluminate, |
| 30.4pbw | Tetramethylammonim silicate (10% aqueous solution), |
| 7.6pbw | Precipitated hydrated silica (HiSil, ♦). |

The mixture was crystallized at 100°C for 24 hours with stirring under autogeneous pressure. The resulting product was recovered by filtration and dried in air at ambient temperature. A sample of the product was calcined at 540°C for 1 hour in nitrogen, followed by 6 hours in air. The characterisitics of the product were consistent with its identity as MCM-41.

The MCM-41 was exchanged with room temperature aqueous solutions of ammonium nitrate and subsequently dried overnight at 121°C (250°F). A portion of the resultant crystals was combined with $Al_2O_3$ to form a mixture of 65 parts, by weight MCM-41 and 35 parts alumina. Water was added to this mixture to allow the resulting catalyst to be formed into extrudates. The catalyst was activated by calcination at 510°C (950°F) in 5v/v/min of nitrogen for 6 hours followed by the replacement of the nitrogen with 5v/v/min of air. The calcination was completed by raising the temperature to 538°C (1000°F) and maintaining that temperature in 5v/v/min air for 18 hours. Nickel and tungsten were incorporated by incipient wetness coimpregnation using solutions of $Ni(NO_3)_2.6H_2O$ and $(NH_4)_6H_2W_{12O}.40H_2O$. After drying for 12 hours at 121°C (250°F), the extrudate was calcined in 5v/v/min air at 538°C (1000°F) for 3 hours.

The physical and chemical properties of the NiW/MCM-41/$Al_2O_3$ catalyst are set out below:

| | |
|---|---|
| Nickel, wt % | 5.8 |
| Tungsten, wt % | 29.1 |
| Sodium, ppm | 200 |
| Surface Area, $m^2/g$ | 242 |
| Packing Density, g/ml | 0.749 |

This catalyst was used for wax hydrocracking/hydroisomerization at the following process conditions: 13900 kPa (2000 psig) hydrogen pressure, 1350 v/v (7500 SCF/Bbl) hydrogen circulation and 1 LHSV, as in Example 29, using the same wax feed as in Example 33. The operating temperature was adjusted from 382° to 397°C (720° to 746°F) to span a range of 343°C- (650°F-) boiling point conversions. The results of these runs are given in Table 23.

Table 23

| Wax HDC/HDI | | | | | | | | |
|---|---|---|---|---|---|---|---|---|
| Mass Bal. No. | 82 | 84 | 85 | 86 | 87 | 88 | 90 | 92 |
| Reactor temp, °C (°F) | 382 (720) | 385 (725) | 385 (725) | 389 (733) | 389 (732) | 393 (740) | 397 (746) | 388 (731) |
| 650°F- Conv, wt % | 18.4 | 21.5 | 23.6 | 29.2 | 29.8 | 41.1 | 59.5 | 35.6 |
| Lube Properties: | | | | | | | | |
| KV @ 100°C | 5.81 | 5.47 | 5.30 | 4.86 | 4.857 | 4.55 | 4.29 | 5.02 |
| VI | 143.6 | 145.7 | 144.3 | 142.8 | 145.7 | 142.0 | 141.3 | 145.6 |
| Pour Point, °C (°F) | -6.7 (20) | -15 (5) | -15 (5) | -15 (5) | -15 (5) | -12 (10) | -12 (10) | -15 (5) |
| VI @ 0°F Pour Pt | 139.6 | 144.7 | 143.3 | 141.8 | 144.7 | 140 | 139.3 | 144.6 |
| Lube Yield, wt % | 39.5 | 38.6 | 40.3 | 47.6 | 44.3 | 47.5 | 43.9 | 47.2 |
| Wax Conversion | 42.3 | 49.6 | 42.7 | 65.4 | 68.7 | 81.3 | 84.7 | 65.6 |

Figure 2 of the drawings shows that the activity of the NiW/MCM-41 is higher than the activity of the fluorided

NiW/alumina catatlyst. For example, at 30 wt % 343°C- (650°F-) conversion, the fluorided catalyst required a 394°C (742°F) reactor temperature, whereas, the MCM-41 catalyst required about 5.6°C (10°F) lower temperature of 389°C (732°F). In the preferred boiling point conversion range of about 30-60 wt % 343°C-(650°F-) conversion or greater, this activity advantage is beneficial in terms of lower start-of-cycle temperature and potentially longer catalyst life.

Figure 3 shows that the lube yield for the fluorided NiW/alumina and the NiW/MCM-41 catalysts are similar at low wax conversions below 50 wt %, but at higher wax conversion the unpromoted NiW/MCM-41 catalyst has a desirable yield number benefit compared to the fluorided NiW/alumina catalyst.

Figure 4 shows that the lube VI of the NiW/MCM-41 is comparable to the VI obtained with the fluorided NiW/alumina catalyst. In the wax conversion range of commercial interest (50-70 wt %), the MCM-41 catalyst gives a consistantly higher than 140 VI product which is comparable to the fluorided catalyst.

Figure 5 shows a viscosity benefit of the MCM-41 products. At a given wax conversion the lubes obtained from the MCM-41 based catalyst are higher in viscosity than the fluorided amorphous catalyst. Since the wax hydrocracking/hydroisomerization process significantly reduces the viscosity of the hydrocracked/hydroisomerized feed, it is desirable to maintain viscosity as high as possible. For example, the target viscosity for this feed is 5 $mm^2/s$ at 100°C; the fluorided alumina catalyst can achieve this at 50 wt % wax conversion. The MCM-41 can operate at much higher wax conversion of 65 wt % and still achieve target viscosity. There are significant commercial benefits to operating at higher wax conversion, such as, reduction in MEK loading with higher wax conversion and reduction in size of the unconverted wax recycle stream.

A hydrotreating reactor may be provided downstream of the hydroisomerization reactor to further stabilize the lube product.

## Claims

1. A catalytic composition comprising a metal having hydrogenation- dehydrogenation functionality and a support component comprising a non-layered, inorganic, porous crystalline phase material exhibiting, after calcination, an X-ray diffraction pattern with at least one peak having a relative intensity of 100 at a d-spacing greater than 18 Å and having a benzene sorption capacity greater than 15 grams benzene per 100 grams of the material at 6.7 kPa (50 torr) and 25°C,

2. A catalytic composition according to Claim 1 in which the crystalline material has, after calcination, an arrangement of uniformly-sized pores having diameters of at least 13 Angstrom Units.

3. A catalytic composition according to Claim 1 in which the crystalline material exhibits an electron diffraction pattern that can be indexed with a $d_{100}$ value greater than 18 Angstrom Units.

4. A catalytic composition according to Claim 1 in which the crystalline phase has an X-ray diffraction pattern following calcination with at least one peak whose d-spacing corresponds to the $d_{100}$ value from the electron diffraction pattern.

5. A catalytic composition according to Claim 1 in which the crystalline phase has a hexagonal arrangement of uniformly-sized pores of at least 13 Å diameter and which exhibits, after calcination, a hexagonal electron diffration pattern that can be indexed with a $d_{100}$ value greater than 18 Å.

6. A catalytic composition according to Claim 5 in which the crystalline phase has an X-ray diffraction pattern following calcination with at least one peak whose d-spacing corresponds to the $d_{100}$ value from the electron diffraction pattern.

7. A catalytic composition according to Claim 5 in which the crystalline phase has, after calcination, an X-ray diffraction pattern which exhibits at least two peaks at positions greater than 10 Angstrom Units d-spacing at least one of which is at a position greater than 18 Angstrom Units d-spacing, and no peaks at positions less than 10 Angstrom units d-spacing with relative intensity greater than 20% of the strongest peak.

8. A catalytic composition according to Claim 5 in which the crystalline phase has, after calcination, an X-ray diffraction pattern which exhibits no peaks at positions less than about 10 Angstrom units d-spacing with relative intensity greater than about 10% of the strongest peak.

9. A catalytic composition according to Claim 1 in which the crystalline material is a metallosilicate.

**10.** A catalytic composition according to Claim 9 in which the crystalline material is an aluminosilicate.

**11.** A catalytic composition according to Claim 1 in which the composition includes at least 0.1 wt % of the metal hydrogenation-dehydrogenation component.

**12.** A catalytic composition according to Claim 11 in which the composition includes at least 0.1 wt % of a noble metal from Period 5 or 6 of Group VIII of the Periodic Table.

**13.** A catalytic composition according to Claim 12 in which the noble metal comprises platinum.

**14.** A catalytic composition according to Claim 1 in which the composition includes a base metal hydrogenation-dehydrogenation component comprising at least one metal from Group VIII of the Periodic Table.

**15.** A catalytic composition according to Claim 14 in which the metal hydrogenation-dehydrogenation component comprises at least one metal from Group VIII of the Periodic Table and at least one metal from Group VIB of the Periodic Table.

**16.** A catalytic composition according to Claim 14 in which the metal hydrogenation-dehydrogenation component comprises nickel and tungsten.

**17.** A catalytic composition according to Claim 14 in which the amount of the metal hydrogenation-dehydrogenation component is at least 1 wt %.

**18.** A catalytic composition according to Claim 14 in which the amount of the metal hydrogenation-dehydrogenation component is at least 5 wt %.

**19.** A catalytic composition according to Claim 1 which includes a matrix material composited with the crystalline material.

**20.** A catalytic composition according to Claim 19 in which the matrix material comprises alumina.

**21.** A catalytic composition according to any one of the preceding claims in which the support component has a composition, expressed on an anhydrous basis as follows:

$$rRM_{n/q}(W_aX_bY_cZ_dO_h)$$

wherein R is the total organic material not included in M; r is the number of moles or mole fraction of R; M is one or more ions; n is the charge of the composition excluding M expressed as oxides; q is the weighted molar average valence of M; n/q is the number of moles or mole fraction of M; W is one or more divalent elements; X is one or more trivalent elements; Y is one or more tetravalent elements; Z is one or more pentavalent elements; a, b, c, and d are mole fractions of W, X, Y, and Z, respectively; h is a number of from 1 to 2.5; and (a + b + c + d) = 1 .

**22.** A method of making the catalytic composition of Claim 1 comprising incorporating a metal having hydrogenation-dehydrogenation functionality with a support material comprising a non-layered, inorganic, porous crystalline phase material exhibiting, after calcination, an X-ray diffraction pattern with at least one peak having a relative intensity of 100 at a d-spacing greater than about 18 Å and having a benzene sorption capacity greater than about 15 grams benzene per 100 grams of the material at 50 torr and 25°C.

**23.** A method according to Claim 22 in which the metal is incorporated into the support material by cation-exchange with the support material.

**24.** A method according to Claim 23 in which the metal is incorporated into the support material by cation-exchange with the crystalline material in the as-synthesized condition.

**25.** A method according to Claim 22 in which the metal is incorporated into a support material comprising the crystalline phase material and a binder.

**26.** A method according to Claim 25 in which the metal is incorporated into the support material by impregnation.

**27.** A catalytic composition of Claim 1 wherein the catalytic composition having a surface area S, expressed in $m^2.g^{-1}$,

is defined by the equation:

$$S \geqq 600 - 13.3X$$

where X is the total metals loading in wt % and is least 12 wt %.

**28.** A catalyst composition acccording to Claim 27 in which the crystalline phase material has, after calcination, a hexagonal arrangement of unifromly-sized pores with diameters of at least about 13 Å and exhibits a hexagonal electron diffraction pattern that can be indexed with a $d_{100}$ value greater than 18 Å.

**29.** A catalyst composition according to Claims 27 or 28 in which the crystalline phase material has an X-ray diffraction pattern following calcination with at least one peak whose d-spacing corresponds to the $d_{100}$ value from the electron diffraction pattern.

**30.** A catalyst composition according to Claims 27, 28, or 29 in which the crystalline phase exhibits a benzene adsorption capacity of greater than 15 grams benzene per 100 grams at 6.7 kPa (50 torr) and 25°C.

**31.** A catalyst composition according to Claims 27, 28, 29 or 30 in which the crystalline phase material has a composition expressed as follows:

$$M_{n/q}(W_aX_bY_cZ_dO_h)$$

wherein M is one or more ions; n is the charge of the composition excluding M expressed as oxides; q is the weighted molar average valence of M; n/q is the number of moles or mole fraction of M; W is one or more divalent elements; X is one or more trivalent elements; Y is one or more tetravalent elements; Z is one or more pentavalent elements; a, b, c, and d are mole fractions of W, X, Y, and Z, respectively; h is a number of from 1 to 2.5; and (a+b+c+d) = 1 .

**32.** A catalyst composition according to Claim 31 wherein W comprises a divalent first row transition metal or magnesium; X comprises aluminum, boron, gallium or iron; Y comprises silicon or germanium; and Z comprises phosphorus.

**33.** A catalyst composition according to Claim 31 wherein a and d are 0 and h = 2.

**34.** A catalyst composition according to Claim 33 wherein X comprises aluminum, boron, gallium or iron and Y comprises silicon or germanium.

**35.** A catalyst composition according to Claim 27 in which the catalyst comprises at least one base metal of Groups VIA, VIIA or VIIIA of the Periodic Table.

**36.** A catalyst composition according to Claim 27 in which the catalyst comprises at least one base metal of Group VIA and at least one base metal of Group VIIIA of the Periodic Table.

**37.** A catalyst composition according to Claim 27 having a surface area of at least 200 $m^2g^{-1}$ and a total metal content of at least 12 wt %.

**38.** A catalyst composition according to Claim 27 having a surface area of at least 300 $m^2g^{-1}$ and a total metal content of 12 to 20 wt %.

**39.** A hydroprocessing catalyst according to Claim 27 having a surface area of at least 200 $m^2g^{-1}$, a total metal content of at least 12 wt % and a pore volume of at least 0.6 $cc.g^{-1}$.

**40.** A hydroprocessing catalyst according to Claim 27 having a surface area of at least 300 $m^2g^{-1}$, a total metal content of 12 to 20 wt % and a pore volume of 0.6 to 0.8 $cc.g^{-1}$.

**41.** A hydroprocessing catalyst according to Claim 27 having a surface area of at least 200 $m^2g^{-1}$, a total metal content of at least 12 wt % and a real density of up to 6.0 $g.cc^{-1}$.

**42.** A method of making a catalyst composition of Claim 27 which comprises incorporating a metal component into an inorganic, non-layered, porous, crystalline phase material having pores with diameters of at least about 13 Å and

exhibiting, after calcination, an X-ray diffraction pattern with at least one peak with a relative intensity of 100 at a d-spacing greater than about 18 Å, to produce a bifunctional catalyst having a surface area, S, expressed in $m^2.g^{-1}$., defined by the equation:

$$S \geqq 600 - 13.3X$$

where X is the metal content in wt % and is at least 12 wt %.

**43.** A method of making a catalyst according to Claim 42 in which the metal is incorporated by impregnation into the calcined crystalline material.

**44.** A method of making a catalyst according to Claim 42 in which the metals of the metal component are incorporated by impregnation into the calcined crystalline material.

**45.** A method of making a catalyst according to Claim 44 in which the metals are incorporated by the incipient wetness method.

**46.** A method of making a catalyst according to Claim 42 in which the metals are incorporated in to the calcined crystalline material in the absence of a fluorine-containing promoter.

**47.** A method of making a catalyst according to Claim 42 in which the pore diameter of the catalyst is at least 30 Å.

## Patentansprüche

**1.** Katalysatorzusammensetzung, die ein Metall mit Hydrierungs/Dehydrierungs-Funktionalität und eine Trägerkomponente umfaßt, die ein nicht geschichtetes, anorganisches, poröses Material mit kristalliner Phase umfaßt, das nach dem Kalzinieren ein Röntgenbeugungsdiagramm mit mindestens einem Peak mit einer relativen Intensität von 100 bei einem d-Abstand von mehr als 18 Å zeigt und eine Sorptionskapazität für Benzol bei 6,7 kPa (50 Torr) und 25°C von mehr als 15 g Benzol pro 100 g des Materials hat.

**2.** Katalysatorzusammensetzung nach Anspruch 1, wobei das kristalline Material nach dem Kalzinieren eine Anordnung von Poren mit einheitlicher Größe aufweist, die Durchmesser von mindestens 18 Angström-Einheiten haben.

**3.** Katalysatorzusammensetzung nach Anspruch 1, wobei das kristalline Material ein Elektronenbeugungsdiagramm zeigt, das mit einem $d_{100}$-Wert von mehr als 13 Angström-Einheiten indexiert werden kann.

**4.** Katalysatorzusammensetzung nach Anspruch 1, wobei die kristalline Phase nach dem Kalzinieren ein Röntgenbeugungsdiagramm mit mindestens einem Peak hat, dessen d-Abstand dem $d_{100}$-Wert aus dem Elektronenbeugungsdiagramm entspricht.

**5.** Katalysatorzusammensetzung nach Anspruch 1, wobei die kristalline Phase eine hexagonale Anordnung von Poren mit einheitlicher Größe mit einem Durchmesser von mindestens 13 Å hat und das nach dem Kalzinieren ein hexagonales Eleketronenbeugungsdiagramm zeigt, das mit einem $d_{100}$-Wert von mehr als 18 Å indexiert werden kann.

**6.** Katalysatorzusammensetzung nach Anspruch 5, wobei die kristalline Phase nach dem Kalzinieren ein Röntgenbeugungsdiagramm mit mindestens einem Peak hat, dessen d-Abstand dem $d_{100}$-Wert aus dem Elektronenbeugungsdiagramm entspricht.

**7.** Katalysatorzusammensetzung nach Anspruch 5, wobei die kristalline Phase nach dem Kalzinieren ein Röntgenbeugungsdiagramm aufweist, das mindestens zwei Peaks an Positionen mit einem d-Abstand von mehr als 10 Angström-Einheiten, von denen sich einer in einer Position mit einem d-Abstand von mehr als 18 Angström-Einheiten befindet, und keine Peaks an Positionen mit einem d-Abstand von weniger als 10 Angström mit einer relativen Intensität von mehr als 20% des stärksten Peaks hat.

**8.** Katalysatorzusammensetzung nach Anspruch 5, wobei die kristalline Phase nach dem Kalzinieren ein Röntgenbeugungsdiagramm aufweist, das keine Peaks an Positionen mit einem d-Abstand von weniger als etwa 10 Angström-Einheiten mit einer relativen Intensität von mehr als etwa 10% des stärksten Peaks zeigt.

**9.** Katalysatorzusammensetzung nach Anspruch 1, wobei das kristalline Material ein Metallosilicat ist.

**10.** Katalysatorzusammensetzung nach Anspruch 9, wobei das kristalline Material ein Aluminosilicat ist.

**11.** Katalysatorzusammensetzung nach Anspruch 1, wobei die Zusammensetzung mindestens 0,1 Gew.-% einer Hydrierungs/Dehydrierungs-Komponente in Form eines Metalls einschließt.

**12.** Katalysatorzusammensetzung nach Anspruch 11, wobei die Zusammensetzung mindestens 0,1 Gew.-% eines Edelmetalls aus der Periode 5 oder 6 der Gruppe VIII des Periodensystems umfaßt.

**13.** Katalysatorzusammensetzung nach Anspruch 12, wobei das Edelmetall Platin umfaßt.

**14.** Katalysatorzusammensetzung nach Anspruch 1, wobei die Zusammensetzung eine Hydrierungs/Dehydrierungs-Komponente in Form eines Nichtedelmetalls einschließt, das mindestens ein Metall aus der Gruppe VIII des Periodensystems umfaßt.

**15.** Katalysatorzusammensetzung nach Anspruch 14, wobei die Hydrierungs/Dehydrierungs-Komponente in Form eines Metalls mindestens ein Metall aus der Gruppe VIII des Periodensystems und mindestens ein Metall aus der Gruppe VIB des Periodensystems umfaßt.

**16.** Katalysatorzusammensetzung nach Anspruch 14, wobei die Hydrierungs/Dehydrierungs-Komponente in Form eines Metalls Nickel und Wolfram umfaßt.

**17.** Katalysatorzusammensetzung nach Anspruch 14, wobei die Menge der Hydrierungs/Dehydrierungs-Komponente in Form eines Metalls mindestens 1 Gew.-% beträgt.

**18.** Katalysatorzusammensetzung nach Anspruch 14, wobei die Menge der Hydrierungs/Dehydrierungs-Komponente in Form eines Metalls mindestens 5 Gew.-% beträgt.

**19.** Katalysatorzusammensetzung nach Anspruch 1, die ein Matrixmaterial einschließt, das mit dem kristallinen Material verbunden ist.

**20.** Katalysatorzusammensetzung nach Anspruch 19, wobei das Matrixmaterial Aluminiumoxid umfaßt.

**21.** Katalysatorzusammensetzung nach einem der vorstehenden Ansprüche, wobei die Trägerkomponente eine Zusammensetzung hat, die auf wasserfreier Basis wie folgt ausgedrückt wird:

$$rRM_{n/q}(W_aX_bY_cZ_dO_h)$$

worin R das gesamte organische Material ist, das nicht in M enthalten ist; r die Anzahl der Mole oder der Molenbruch von R ist; M ein oder mehrere Ionen darstellt; n die Ladung der Zusammensetzung, M ausgenommen, als Oxide ausgedrückt, ist; q der gewichtete Mittelwert der molaren Valenz von M ist; n/q die Anzahl der Mole oder der Molenbruch von M ist; W ein oder mehrere zweiwertige Elemente ist; X ein oder mehrere dreiwertige Elemente ist; Y ein oder mehrere vierwertige Elemente ist; Z ein oder mehrere fünfwertige Elemente ist; a, b, c und d die Molenbrüche von W, X, Y bzw. Z sind; h eine Zahl von 1 bis 2,5 ist; und $(a + b + c + d) = 1$.

**22.** Verfahren zur Herstellung einer Katalysatorzusammensetzung nach Anspruch 1, die das Einführen eines Metalls mit einer Hydrierungs/Dehydrierungs-Funktionalität in ein Trägermaterial umfaßt, das ein nicht geschichtetes, anorganisches, poröses Material mit kristalliner Phase umfaßt, das nach dem Kalzinieren ein Röntgenbeugungsdiagramm mit mindestens einem Peak mit einer relativen Intensität von 100 bei einem d-Abstand von mehr als 18 Å zeigt und eine Sorptionskapazität für Benzol bei 50 Torr und 25°C von mehr als etwa 15 g Benzol pro 100 g des Materials hat.

**23.** Verfahren nach Anspruch 22, wobei das Metall durch Kationenaustausch mit dem Trägermaterial in das Trägermaterial eingeführt wird.

**24.** Verfahren nach Anspruch 23, wobei das Metall durch Kationenaustausch mit dem kristallinen Material im synthetisierten Zustand in das Trägermaterial eingeführt wird.

**25.** Verfahren nach Anspruch 22, wobei das Metall in ein Trägermaterial eingeführt wird, das das Material mit kristalliner Phase und ein Bindemittel umfaßt.

**26.** Verfahren nach Anspruch 25, wobei das Metall durch Imprägnieren in das Trägermaterial eingeführt wird.

**27.** Katalysatorzusammensetzung nach Anspruch 1, wobei die Katalysatorzusammensetzung eine Oberfläche S, in $m^2 \cdot g^{-1}$ ausgedrückt, aufweist, die durch die Gleichung definiert wird:

$$S \geq 600 - 13{,}3X$$

worin X die gesamte Beladung mit Metallen in Gew.-% darstellt und mindestens 12 beträgt.

**28.** Katalysatorzusammensetzung nach Anspruch 27, wobei das Material mit kristalliner Phase nach dem Kalzinieren eine hexagonale Anordnung von Poren mit einheitlicher Größe mit Durchmessern von mindestens etwa 13 Å aufweist und ein hexagonales Elektronenbeugungsdiagramm zeigt, das mit einem $d_{100}$-Wert von mehr als 18 Å indexiert werden kann.

**29.** Katalysatorzusammensetzung nach Anspruch 27 oder 28, wobei das Material mit kristalliner Phase nach dem Kalzinieren ein Röntgenbeugungsdiagramm mit mindestens einem Peak aufweist, dessen d-Abstand dem $d_{100}$-Wert aus dem Elektronenbeugungsdiagramm entspricht.

**30.** Katalysatorzusammensetzung nach den Ansprüchen 27, 28 oder 29, wobei die kristalline Phase eine Adsorptionskapazität für Benzol bei 6,7 kPa (50 Torr) und 25°C von mehr als 15 g Benzol pro 100 g aufweist.

**31.** Katalysatorzusammensetzung nach den Ansprüchen 27, 28, 29 oder 30, wobei das Material mit kristalliner Phase eine wie folgt ausgedrückte Zusammensetzung hat:

$$M_{n/q}(W_aX_bY_cZ_dO_h)$$

worin M ein oder mehrere Ionen ist; n die Ladung der Zusammensetzung, M ausgenommen, als Oxide ausgedrückt, ist; q der gewichtete Mittelwert der molaren Valenz von M ist; n/q die Anzahl der Mole oder der Molenbruch von M ist; W ein oder mehrere zweiwertige Elemente ist; X ein oder mehrere dreiwertige Elemente ist; Y ein oder mehrere vierwertige Elemente ist; Z ein oder mehrere fünfwertige Elemente ist; a, b, c und d die Molenbrüche von W, X, Y bzw. Z sind; h eine Zahl von 1 bis 2,5 ist; und (a+b+c+d) = 1 .

**32.** Katalysatorzusammensetzung nach Anspruch 31, wobei W ein zweiwertiges Übergangsmetall der ersten Reihe oder Magnesium umfaßt; X Aluminium, Bor, Gallium oder Eisen umfaßt; Y Silicium oder Germanium umfaßt und Z Phosphor umfaßt.

**33.** Katalysatorzusammensetzung nach Anspruch 31, wobei a und d 0 sind und h = 2 ist.

**34.** Katalysatorzusammensetzung nach Anspruch 33, wobei X Aluminium, Bor, Gallium oder Eisen umfaßt und Y Silicium oder Germanium umfaßt.

**35.** Katalysatorzusammensetzung nach Anspruch 27, wobei der Katalysator mindestens ein Nichtedelmetall der Gruppen VIA, VIIA oder VIIIA des Periodensystems umfaßt.

**36.** Katalysatorzusammensetzung nach Anspruch 27, wobei der Katalysator mindestens ein Nichtedelmetall der Gruppe VIA und mindestens ein Nichtedelmetall der Gruppe VIIIA des Periodensystems umfaßt.

**37.** Katalysatorzusammensetzung nach Anspruch 27 mit einer Oberfläche von mindestens 200 $m^2 \cdot g^{-1}$ und einem gesamten Metallgehalt von mindestens 12 Gew.-%.

**38.** Katalysatorzusammensetzung nach Anspruch 27 mit einer Oberfläche von mindestens 300 $m^2 \cdot g^{-1}$ und einem gesamten Metallgehalt von 12 bis 20 Gew.-%.

**39.** Hydrobehandlungskatalysator nach Anspruch 27 mit einer Oberfläche von mindestens 200 $m^2 \cdot g^{-1}$, einem gesamten Metallgehalt von mindestens 12 Gew.-% und einem Porenvolumen von mindestens 0,6 $cm^3 \cdot g^{-1}$.

**40.** Hydrobehandlungskatalysator nach Anspruch 27 mit einer Oberfläche von mindestens 300 $m^2 \cdot g^{-1}$, einem gesamten Metallgehalt von 12 bis 20 Gew.-% und einem Porenvolumen von 0,6 bis 0,8 $cm^3 \cdot g^{-1}$.

41. Hydrobehandlungskatalysator nach Anspruch 27 mit einer Oberfläche von mindestens 200 $m^2 \cdot g^{-1}$, einem gesamten Metallgehalt von mindestens 12 Gew.-% und einer wirklichen Dichte von bis zu 6,0 $g/cm^3$.

42. Verfahren zur Herstellung einer Katalysatorzusammensetzung nach Anspruch 27, das das Einführen einer Metallkomponente in ein anorganisches, nicht geschichtetes, poröses Material mit kristalliner Phase umfaßt, das Poren mit Durchmessern von mindestens etwa 13 Å hat und nach dem Kalzinieren ein Röntgenbeugungsdiagramm mit mindestens einem Peak mit einer relativen Intensität von 100 bei einem d-Abstand von mehr als etwa 18 Å zeigt, wodurch ein bifunktioneller Katalysator mit einer Oberfläche S, in $m^2 \cdot g^{-1}$ ausgedrückt, hergestellt wird, die durch die Gleichung

$$S \geq 600 -13{,}3X$$

definiert wird, worin X der Metallgehalt in Gew.-% ist und mindestens 12 Gew.-% beträgt.

43. Verfahren zur Herstellung eines Katalysators nach Anspruch 42, wobei das Metall durch Imprägnieren in das kalzinierte kristalline Material eingeführt wird.

44. Verfahren zur Herstellung eines Katalysators nach Anspruch 42, wobei die Metalle der Metallkomponente durch Imprägnieren in das kalzinierte kristalline Material eingeführt werden.

45. Verfahren zur Herstellung eines Katalysators nach Anspruch 44, wobei die Metalle durch ein Anfangsfeuchteverfahren eingeführt werden.

46. Verfahren zur Herstellung eines Katalysators nach Anspruch 42, wobei die Metalle ohne einen fluorhaltigen Promotor in das kalzinierte kristalline Material eingeführt werden.

47. Verfahren zur Herstellung eines Katalysators nach Anspruch 42, wobei der Porendurchmesser des Katalysators mindestens 30 Å beträgt.

## Revendications

1. Une composition catalytique comprenant un métal présentant une fonctionnalité d'hydrogénation-déshydrogénation et un composant support comprenant un matériau en phase cristalline poreuse, inorganique, non stratifiée présentant, après calcination, un spectre de diffraction aux rayons-X présentant au moins un pic ayant une intensité relative de 100 à une distance d supérieure à 18 Å et ayant une capacité de sorption du benzène supérieure de 15 grammes de benzène par 100 grammes du matériau à 6,7 kPa (50 torr) et 25°C.

2. Une composition catalytique selon la revendication 1, dans laquelle le matériau cristallin présente, après calcination, un arrangement de pores de taille uniforme ayant des diamètres d'au moins 13 Å.

3. Une composition catalytique selon la revendication 1, dans laquelle le matériau cristallin présente un spectre de diffraction électronique qui peut être indexé à une valeur de $d_{100}$ supérieure à 18 Å.

4. Une composition catalytique selon la revendication 1, dans laquelle la phase cristalline présente un spectre de diffraction aux rayons-X après calcination comprenant au moins un pic dont la distance d correspond à la valeur de $d_{100}$ obtenue à partir du spectre de diffraction électronique.

5. Une composition catalytique selon la revendication 1, dans laquelle la phase cristalline présente un arrangement hexagonal de pores de dimension uniforme d'au moins 13 Å de diamètre et qui présente, après calcination, un spectre de diffraction électronique hexagonal qui peut être indexé à une valeur de $d_{100}$ supérieure à 18 Å.

6. Une composition catalytique selon la revendication 5, dans laquelle la phase cristalline présente un spectre de diffraction aux rayons-X après calcination ayant au moins un pie dont la distance d correspond à la valeur de $d_{100}$ du spectre de diffraction électronique.

7. Une composition catalytique selon la revendication 5, dans laquelle la phase cristalline présente, après calcination, un spectre de diffraction aux rayons-X qui présente au moins deux pics à des positions supérieures à 10 Å de distance d, dont un au moins est à une position qui dépasse 18 Å de distance d et aucun pic a des positions en dessous de 18 Å de distance d avec des intensités relatives supérieures à 20 % du pic le plus intense.

8. Une composition catalytique selon la revendication 5, dans laquelle la phase cristalline présente après calcination un spectre de diffraction aux rayons-X qui ne présente aucun pic à des positions inférieures à 10 Å de distance d avec des intensités relatives supérieures à environ 10 % du pic le plus intense.

9. Une composition catalytique selon la revendication 1, dans laquelle le matériau cristallin est un métallosilicate.

10. Une composition catalytique selon la revendication 9, dans laquelle le matériau cristallin est un aluminosilicate.

11. Une composition catalytique selon la revendication 1, dans laquelle la composition comprend au moins 0,1 % en poids du composant métallique d'hydrogénation-déshydrogénation.

12. Une composition catalytique selon la revendication 11, dans laquelle la composition comprend au moins 0,1 % en poids d'un métal noble de la période 5 ou 6 du Groupe VIII du Tableau Périodique.

13. Une composition catalytique selon la revendication 12, dans laquelle le métal noble comprend le platine.

14. Une composition catalytique selon la revendication 1, dans laquelle la composition comprend un composant d'hydrogénation-déshydrogénation à base de métal comprenant au moins un métal du Groupe VIII du Tableau Périodique.

15. Une composition catalytique selon la revendication 14, dans laquelle le composant de métal d'hydrogénation-déshydrogénation comprend au moins un métal du Groupe VIII du Tableau Périodique et au moins un métal du Groupe VIB du Tableau Périodique.

16. Une composition catalytique selon la revendication 14, dans laquelle le composant de métal d'hydrogénation-déshydrogénation comprend le nickel et le tungstène.

17. Une composition catalytique selon la revendication 14, dans laquelle la quantité de métal d'hydrogénation-déshydrogénation est d'au moins 1 % en poids.

18. Une composition catalytique selon la revendication 14, dans laquelle la quantité de composant de métal d'hydrogénation-déshydrogénation est au moins 5 % en poids.

19. Une composition catalytique selon la revendication 1, qui comprend un matériau de matrice composite avec le matériau cristallin.

20. Une composition catalytique selon la revendication 19, dans laquelle le matériau de matrice comprend l'alumine.

21. Une composition catalytique selon l'une quelconque des revendications précédentes dans laquelle le composant support présente une composition, exprimée à l'état anhydre, de la manière suivante :

$$rRM_{n/q}(W_aX_bY_cZ_dO_h)$$

où R est la substance organique totale non comprise dans M ; R est le nombre molaire ou fraction molaire de R ; M représente un ou plusieurs ions ; n est la charge de la composition à l'exclusion de M exprimé en tant qu'oxydes ; q est la valence moyenne molaire pondérée de M ; n/q est le nombre de moles ou fraction molaire de M ; W représente un ou plusieurs éléments divalents ; X représente un ou plusieurs éléments trivalents ; Y représente un ou plusieurs éléments tétravalents ; Z représente un ou plusieurs éléments pentavalents ; a, b, c, d sont des fractions molaires de W, X, Y et Z, respectivement ; h est un nombre de 1 à 2,5 ; et $(a + b + c + d) = 1$ .

22. Un procédé de préparation de la composition catalytique selon la revendication 1, comprenant l'incorporation d'un métal ayant une fonctionnalité d'hydrogénation-déshydrogénation dans un matériau support comprenant un matériau en phase cristalline poreux inorganique non stratifié, présentant, après calcination, un spectre de diffraction aux rayons-X comportant au moins un pic ayant une intensité relative de 100 à une distance d supérieure à environ 18 Å et ayant une capacité de sorption du benzène supérieure à environ 15 grammes de benzène par 100 grammes du matériau à 50 torr et 25°C.

23. Un procédé selon la revendication 22, dans lequel le métal est incorporé dans le matériau de support par échange

de cation avec le matériau de support.

**24.** Un procédé selon la revendication 23, dans lequel on incorpore le métal dans le matériau de support par échange de cation avec le matériau cristallin à l'état tel que synthétisé.

**25.** Un procédé selon la revendication 22, dans lequel le métal est incorporé dans un matériau de support comportant un matériau en phase cristalline et un liant.

**26.** Un procédé selon la revendication 25, dans lequel on incorpore le métal dans le matériau de support par imprégnation.

**27.** Une composition catalytique selon la revendication 1, dans laquelle la composition catalytique, ayant une surface spécifique S, exprimée en $m^2.g^{-1}$, est définie par l'équation :

$$S \geq 600 - 13{,}3X$$

où X est la charge totale en métal en poids % et qui est d'au moins 12 % en poids.

**28.** Une composition catalytique selon la revendication 27, dans laquelle le matériau en phase cristalline présente, après calcination, une disposition hexagonale de pores de taille uniforme d'un diamètre d'au moins 13 Å et qui présente un spectre de diffraction électronique hexagonal qui peut être indexé à une valeur $d_{100}$ supérieure à 18 Å.

**29.** Une composition catalytique selon la revendication 27 ou 28, dans laquelle le matériau de la phase cristalline présente un spectre de diffraction aux rayons-X après calcination comportant au moins un pic dont la distance d correspond à la valeur du $d_{100}$ à partir du spectre de diffraction électronique.

**30.** Une composition catalytique selon la revendication 27, 28 ou 29 dans laquelle la phase cristalline présente une capacité de sorption du benzène supérieure à 15 grammes de benzène par 100 grammes à 6,7 kPa (50 torr) et 25°C.

**31.** Une composition catalytique selon la revendication 27, 28, 29 ou 30 dans laquelle le matériau de la phase cristalline présente une composition répondant à la formule suivante :

$$M_{n/q}(W_aX_bY_cZ_dO_h)$$

où M est un ou plusieurs ions ; n est la charge de la composition à l'exclusion de M exprimé en oxydes ; q est la valence moyenne molaire pondérée de M ; n/q est le nombre de moles ou fraction molaire de M ; W représente un ou plusieurs éléments divalents ; X représente un ou plusieurs éléments trivalents ; Y représente un ou plusieurs éléments tétravalents ; Z représente un ou plusieurs éléments pentavalents ; a, b, c, d sont des fractions molaires de W, X, Y et Z, respectivement ; h est un nombre de 1 à 2,5 et (a+b+c+d) = 1 .

**32.** Une composition catalytique selon la revendication 31, dans laquelle W comprend un métal de transition divalent de la première ligne ou le magnésium ; X comprend l'aluminium, le bore, le gallium ou le fer ; Y comprend le silicium ou le germanium et Z comprend le phosphore.

**33.** Une composition catalytique selon la revendication 31, dans laquelle a et b sont égaux à 0 et h = 2.

**34.** Une composition catalytique selon laquelle X comprend l'aluminium, le bore, le gallium ou le fer et Y comprend le silicium ou le germanium.

**35.** Une composition catalytique selon la revendication 27 dans laquelle le catalyseur comprend au moins un métal de base des Groupes VIA, VIIA ou VIIIA du Tableau Périodique.

**36.** Une composition catalytique selon la revendication 27, dans laquelle le catalyseur comprend au moins un métal de base du Groupe VIA et au moins un métal de base du Groupe VIIIA du Tableau Périodique.

**37.** Une composition catalytique selon la revendication 27, ayant une surface spécifique d'au moins 200 $m^2g^{-1}$ et une teneur en métal totale d'au moins 12 % en poids.

**38.** Une composition catalytique selon la revendication 27, ayant une surface spécifique d'au moins 300 $m^2g^{-1}$ et une

teneur en métal totale de 12 à 20 % en poids.

**39.** Un catalyseur d'hydrotraitement selon la revendication 27 ayant une surface spécifique d'au moins 200 $m^2g^{-1}$, une teneur en métal totale d'au moins 12 % en poids et un volume de pores d'au moins 0,6 $cm^3g^{-1}$.

**40.** Un catalyseur d'hydrotraitement selon la revendication 27 ayant une surface spécifique d'au moins 300 $m^2/g^{-1}$, une teneur totale en métal de 12 à 20 % en poids et un volume de pores de 0,6 à 0,8 $cm^3g^{-1}$.

**41.** Un catalyseur d'hydrotraitement selon la revendication 27 ayant une surface spécifique d'au moins 200 $m^2/g^{-1}$, une teneur totale de métal d'au moins 12 % en poids et une densité vraie pouvant atteindre 6,0 $g.cm^{-3}$.

**42.** Une méthode de préparation d'une composition de catalyseur selon la revendication 27 qui comprend l'incorporation d'un composant métallique dans un matériau en phase cristalline poreux, non stratifié inorganique ayant des pores d'un diamètre d'au moins environ 13 Å, et présentant, après calcination un spectre de diffraction aux rayons-X dont au moins un pic a une intensité relative de 100 à une distance-d supérieure à environ 18 Å, pour donner un catalyseur bifonctionnel présentant une surface spécifique, S, exprimée en $m^2.g^{-1}$, définie par l'expression :

$$S \geq 600 - 13{,}3X$$

où X est la teneur en métal en poids % et Y est égal à au moins 12 en poids %.

**43.** Un procédé de préparation d'un catalyseur selon la revendication 42, dans lequel on incorpore le métal dans le matériau cristallin calciné par imprégnation.

**44.** Un procédé de préparation d'un catalyseur selon la revendication 42, dans lequel les métaux du composant métallique sont incorporés dans le matériau cristallin calciné par imprégnation.

**45.** Un procédé de préparation d'un catalyseur selon la revendication 44, dans lequel les métaux sont incorporés par la méthode d'humidification naissante.

**46.** Un procédé de préparation d'un catalyseur selon la revendication 42, dans lequel on incorpore les métaux dans le matériau cristallin calciné en l'absence de promoteur contenant du fluor.

**47.** Un procédé de préparation d'un catalyseur selon la revendication 42, dans lequel le diamètre de pore du catalyseur est d'au moins 30 Å.

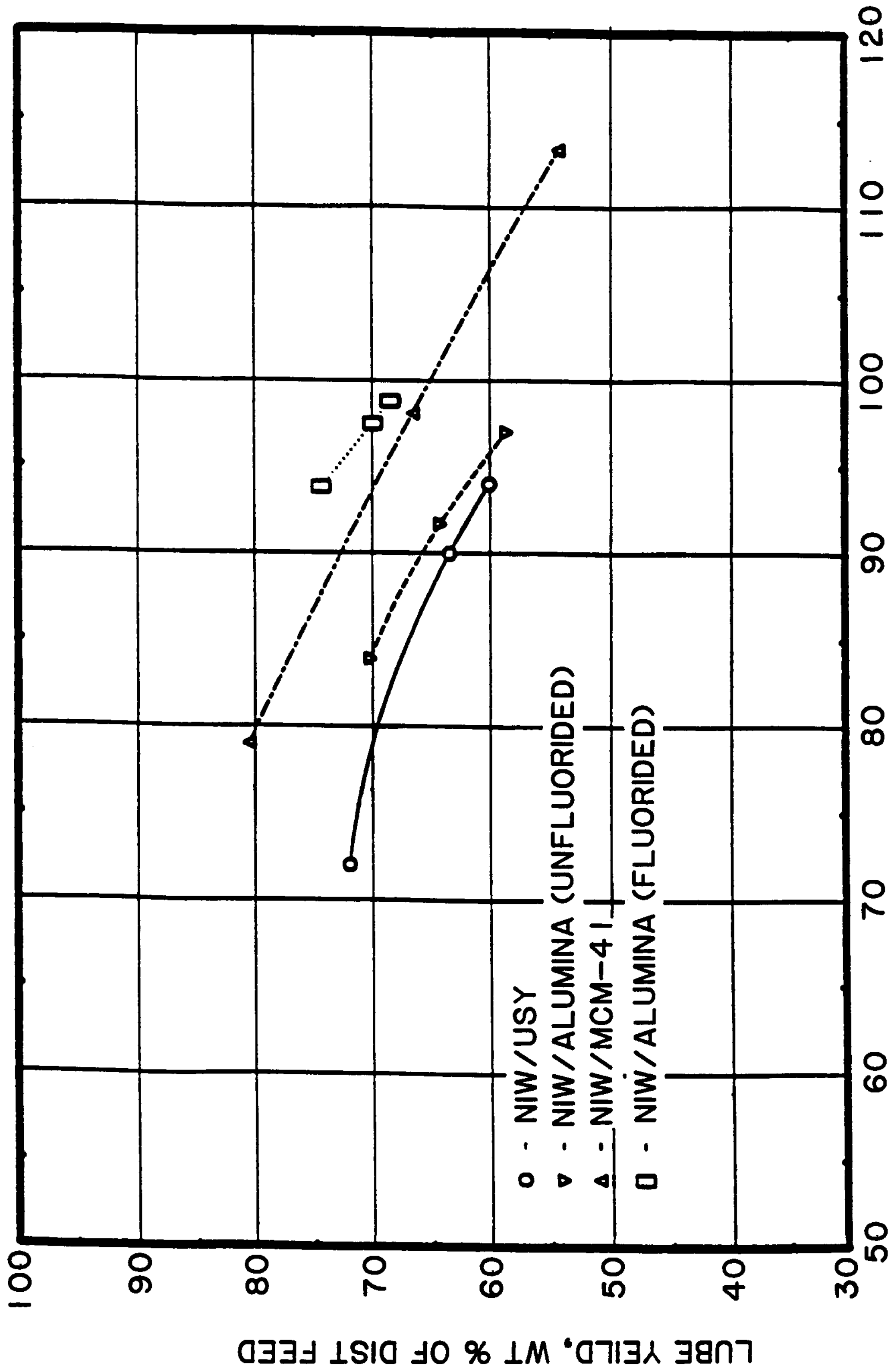
o - NIW/USY
▽ - NIW/ALUMINA (UNFLUORIDED)
△ - NIW/MCM-41
□ - NIW/ALUMINA (FLUORIDED)
LUBE VI
LUBE YEILD, WT % OF DIST FEED
50
60
70
80
90
100
110
120
30
40
50
60
70
80
90
100

FIG. 1

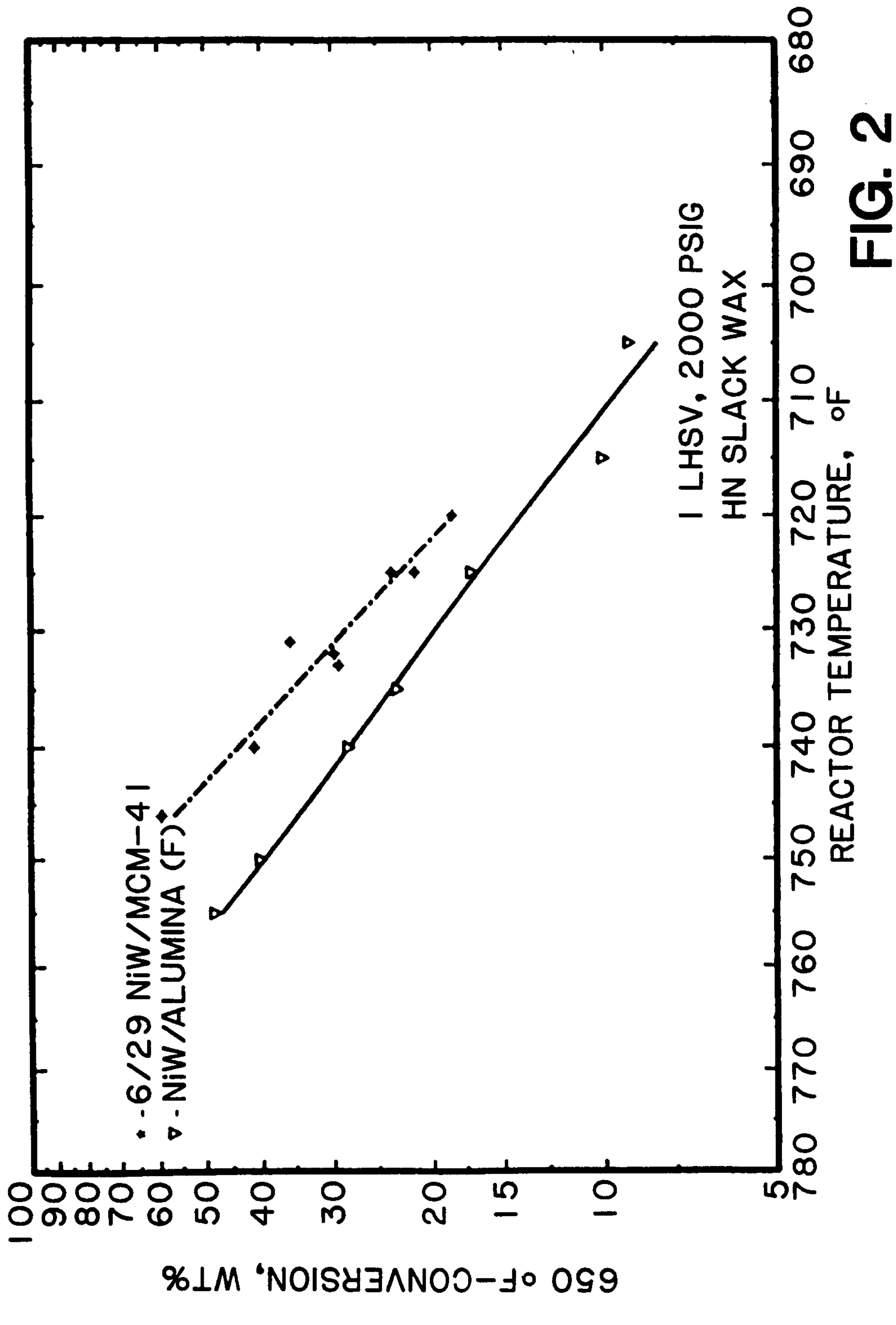

◆ -6/29 NiW/MCM-41
▽ -NiW/ALUMINA (F)
1 LHSV, 2000 PSIG
HN SLACK WAX
650 °F-CONVERSION, WT%
100
90
80
70
60
50
40
30
20
15
10
5
780
770
760
750
740
730
720
710
700
690
680
REACTOR TEMPERATURE, °F


FIG. 2

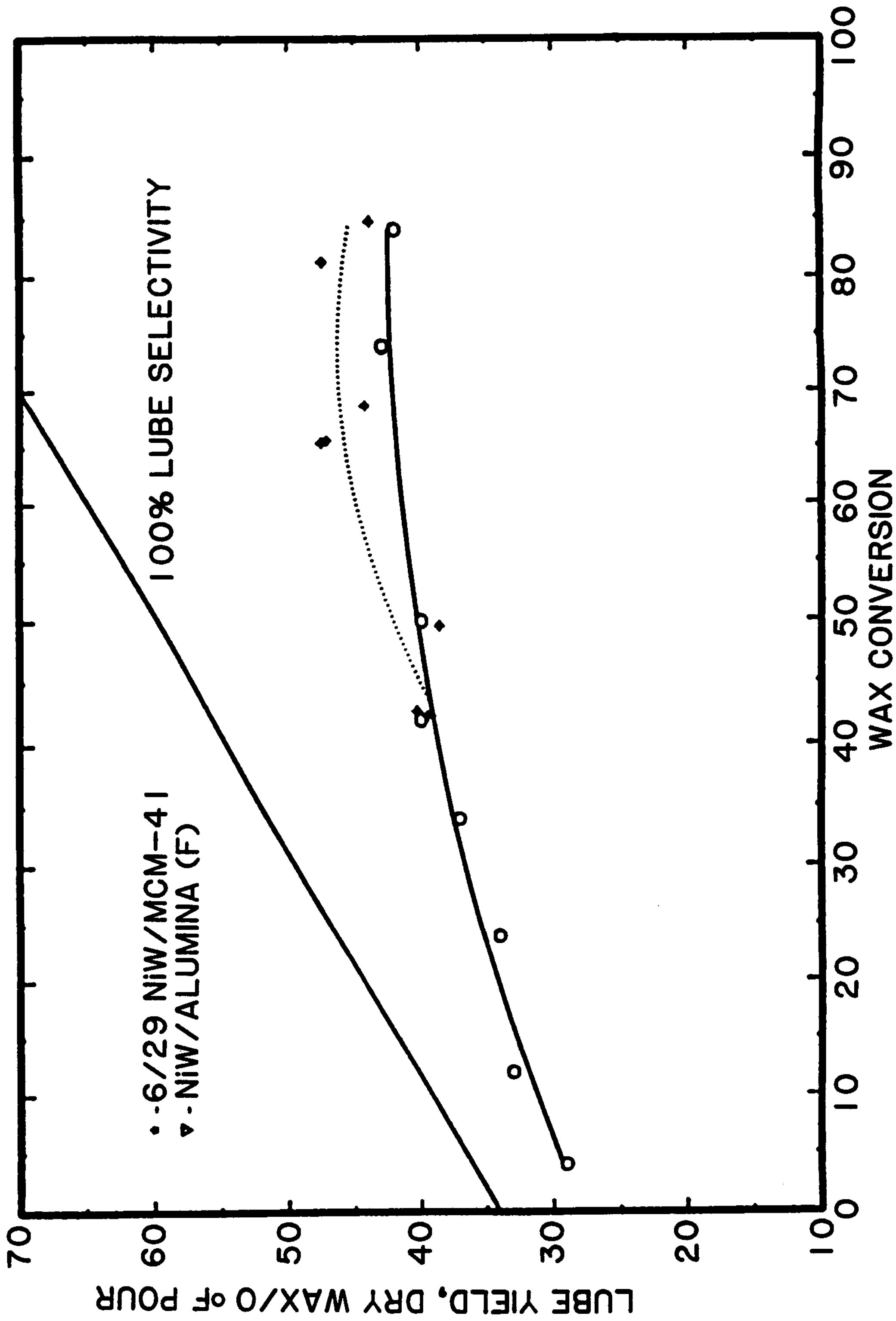
LUBE YIELD, DRY WAX/0 °F POUR
70
60
50
40
30
20
10
0
10
20
30
40
50
60
70
80
90
100
WAX CONVERSION
100% LUBE SELECTIVITY
• - 6/29 NiW/MCM-41
▾ - NiW/ALUMINA (F)

FIG. 3

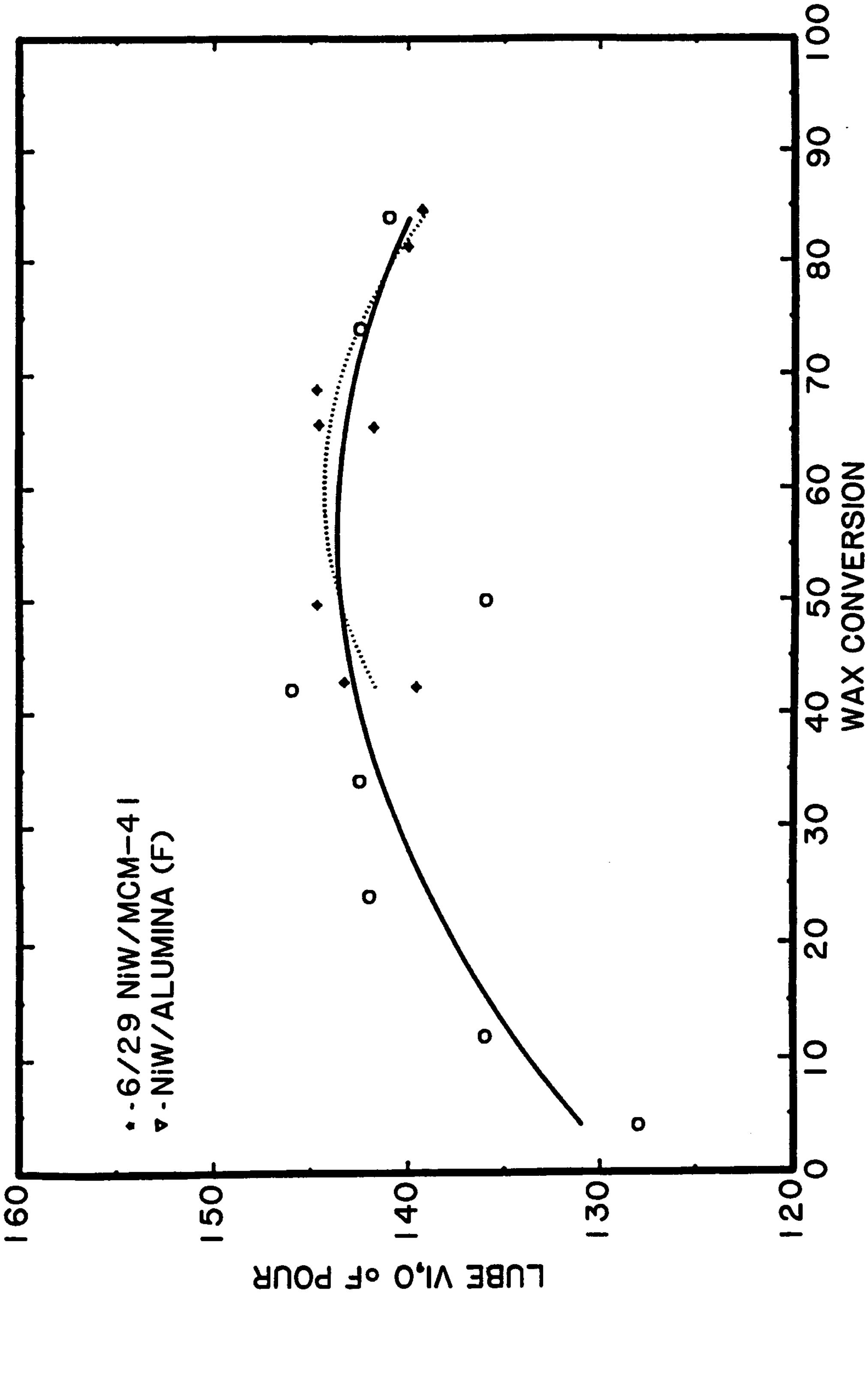
• - 6/29 NiW/MCM-41
▾ - NiW/ALUMINA (F)
LUBE VI, 0 °F POUR
160
150
140
130
120
WAX CONVERSION
0
10
20
30
40
50
60
70
80
90
100

FIG. 4

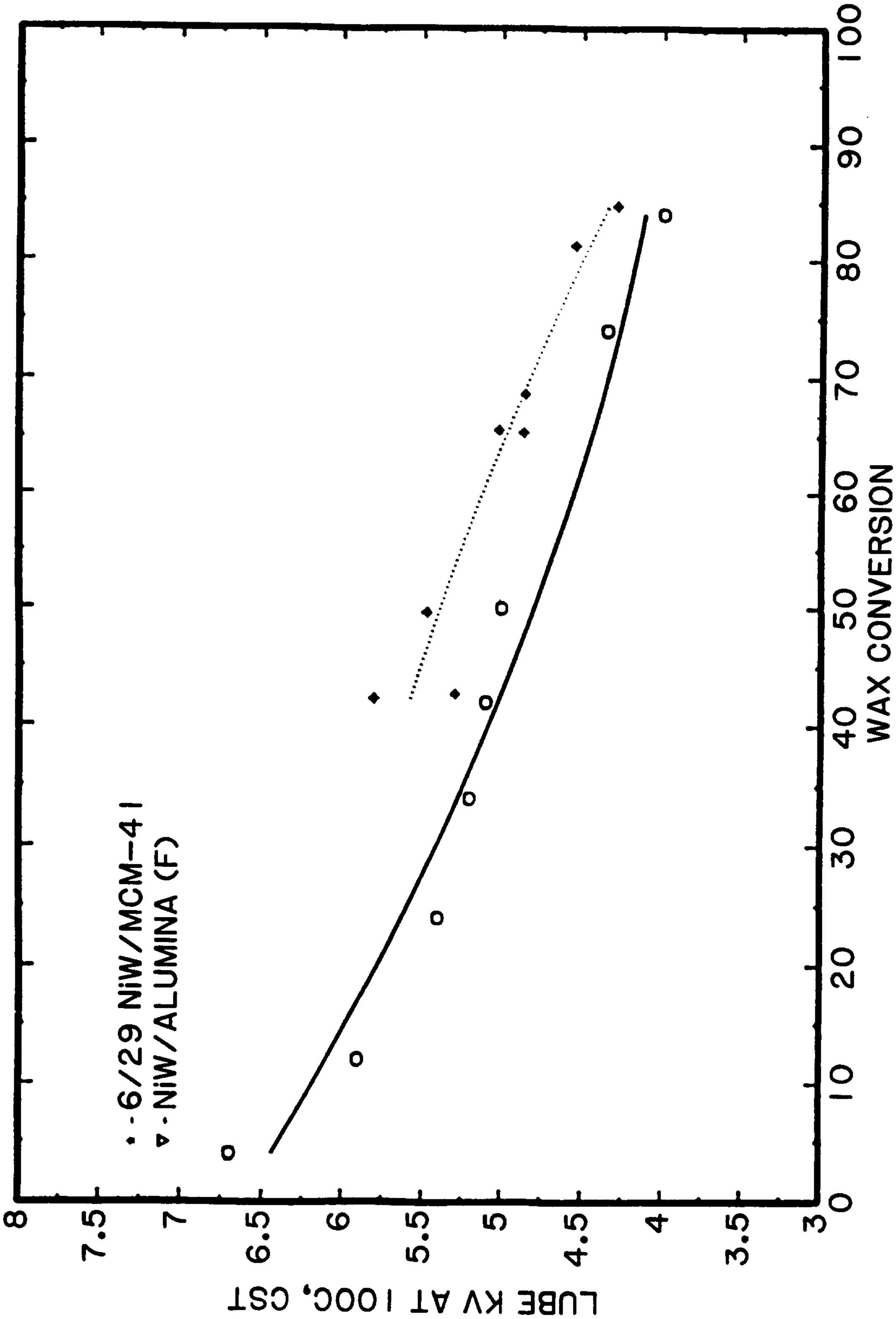

• - 6/29 NiW/MCM-41
▿ - NiW/ALUMINA (F)
LUBE KV AT 100C, CST
WAX CONVERSION
0
10
20
30
40
50
60
70
80
90
100
3
3.5
4
4.5
5
5.5
6
6.5
7
7.5
8


FIG. 5